# EUROPEAN PATENT SPECIFICATION

(11) **EP 2 387 745 B1**
(45) Date of publication and mention of the grant of the patent: **30.03.2016**
(21) Application number: 10732101.0
(22) Date of filing: 14.01.2010
(51) Int. Cl.: G06F 3/044, G06F 3/042, G06F 3/041

(54) **TOUCH-SENSITIVE DISPLAY**
BERÜHRUNGSEMPFINDLICHE ANZEIGE
DISPOSITIF D'AFFICHAGE TACTILE

(30) Priority: 14.01.2009 US 144716 P
(43) Date of publication of application: 23.11.2011
(73) Proprietor: Perceptive Pixel, Inc., New York, NY 10011 (US)
(72) Inventor: HAN, Jefferson, Y., Holliswood, NY 11423 (US)
(74) Representative: Grünecker Patent- und Rechtsanwälte PartG mbB
(86) International application number: PCT/US2010/021075
(87) International publication number: WO 2010/083335

(56) References cited:
- US-A1- 2007 109 239
- US-A1- 2008 121 442
- US-A1- 2008 158 172
- US-A1- 2008 266 273
- US-B1- 6 327 376

## Description

### CROSS-REFERENCE TO RELATED APPLICATIONS

This application claims priority to U.S. Provisional Patent Application Serial No. 61/144,716, filed on January 14, 2009.

### TECHNICAL FIELD

This disclosure relates to touch-sensitive display devices.

### BACKGROUND

Touch-sensitive systems detect and respond to points of contact on one or more surfaces. A touch-sensitive system may be incorporated within an electronic device in the form of a touch screen display that allows a user to both view and manipulate objects using one or more inputs that are in contact with the screen.

US 2008/158172 (A1) describes the use of one or more proximity sensors in combination with one or more touch sensors in a multi-touch panel to detect the presence of a finger, body part or other object and control or trigger one or more functions in accordance with an "image" of touch provided by the sensor outputs is disclosed. In some embodiments, one or more infrared (IR) proximity sensors can be driven with a specific stimulation frequency and emit IR light from one or more areas, which can in some embodiments correspond to one or more multi-touch sensor "pixel" locations. The reflected IR signal, if any, can be demodulated using synchronous demodulation. In some embodiments, both physical interfaces (touch and proximity sensors) can be connected to analog channels in the same electrical core.

US 2008121442 (A1) describes an infrared source that is configured to illuminate the underside of one or more objects on or above a touchable surface of a touch panel. Infrared light reflected from the underside of the object(s) is detected by an infrared sensor integrated in the touch panel below the touchable surface.

US 2007/109239 (A1) describes a liquid crystal device including a front electrode layer, rear electrode layer, a liquid crystal material located between the front electrode layer and the rear electrode layer. A polarizer is located between the liquid crystal material and the front electrode layer and changing an electrical potential between the rear electrode layer and the front electrode layer modifies portions of the liquid crystal material to change the polarization of the light incident thereon. A plurality of light sensitive elements are located together with the rear electrode layer and a processor determines the position of at least one of the plurality of light sensitive elements that has been inhibited from sensing ambient light.

### SUMMARY

The invention is defined by independent claims 1 and 13. Preferred embodiments are described in the dependent claims.

In a general aspect, the disclosure features a touch-sensitive display device that includes: a light emitting layer including light emitting elements configured to generate an output display image and light detecting elements; a capacitive touch-sensitive layer including one or more electrodes; driving circuitry for driving the light emitting elements to generate an output display image; and one or more electronic processing elements. The one or more electronic processing elements are configured to: identify output received from one or more of the light detecting elements; identify output received from at least one of the electrodes; and based on at least one of the identified outputs, determine a position of an input mechanism in proximity to the touch-sensitive display device.

Implementations of the touch-sensitive display device can include one or more of the following features.

The light detecting elements can include photodiodes. Alternatively, or in addition, the light detecting elements can include elements each of which is configured as a multilayer semiconductor device.

The capacitive touch-sensitive layer can form a projective capacitive touch-sensitive layer.

The light emitting elements can be configured to emit light in a visible region of the electromagnetic spectrum during operation of the device. The light emitting elements can be configured to emit light in an infrared region of the electromagnetic spectrum during operation of the device.

The light emitting layer can be segmented into a plurality of pixels, each pixel including at least one light emitting element. At least some of the pixels can include at least one light detecting element.

The capacitive touch-sensitive layer can include a common electrode spaced from each of the one or more electrodes. The one or more electronic processing elements configured to determine the position of the input mechanism in proximity to the touch-sensitive display device can include an electronic processing element configured to detect relative changes in an electrical potential difference between at least one of the electrodes and the common electrode during operation of the device. The one or more electronic processing elements configured to determine the position of the input mechanism in proximity to the touch-sensitive display device can include an electronic processing element configured to determine the position of input mechanism in proximity of the touch-sensitive display device as a consequence of having detected a relative change in the electrical potential difference between the at least one electrode and the common electrode during operation of the device.

The one or more electronic processing elements configured to determine the position of the input mechanism in proximity to the touch-sensitive display device can include an electronic processing element configured to: detect changes in capacitive coupling associated with at least one of the electrodes; and determine the position of the input mechanism in proximity to the touch-sensitive display device as a consequence of having detected a change in at least one capacitive coupling associated with at least one of the electrodes.

The one or more electronic processing elements configured to determine the position of the input mechanism in proximity to the touch-sensitive display device can include an electronic processing element configured to: detect relative changes in amounts of ambient light incident on one or more of the light detecting elements based on output received from one or more light detecting elements; and determine the position of the input mechanism in proximity to the touch-sensitive display device as a consequence of having detected a relative change in an amount of ambient light incident on one or more of the light detecting elements. The one or more electronic processing elements configured to determine the position of the input mechanism in proximity to the touch-sensitive display device can include an electronic processing element configured to: detect relative changes in amounts of ambient light incident on particular light detecting elements based on output received from the particular light detecting elements; and determine a shape of a surface of the input mechanism in proximity to the touch-sensitive display device based on the particular light detecting elements for which relative changes in amounts of incident ambient light were detected.

The one or more electronic processing elements configured to determine the position of the input mechanism in proximity to the touch-sensitive display device can include an electronic processing element configured to: detect changes in at least one electric field associated with at least one of the electrodes; and determine the position of the input mechanism in proximity to the touch-sensitive display device as a consequence of having detected a relative change in at least one electric field associated with at least one of the electrodes. The light emitting layer can be segmented into a plurality of pixels, each pixel including at least one light emitting element. The electronic processing element configured to determine the position of the input mechanism in proximity to the touch-sensitive display device can be further configured to identify one or more pixels of the light emitting layer that are overlaid by the input mechanism based on the detected relative change in at least one electric field associated with at least one electrode. The one or more processing elements can be further configured to control the driving circuitry to cause at least some of the light emitting elements corresponding to the one or more pixels of the light emitting layer determined to be overlaid by the input mechanism to emit increased amounts of light. The one or more processing elements can be configured to detect light reflected from the input mechanism by detecting light using light detectors corresponding to at least some of the pixels of the light emitting layer that are overlaid by the input mechanism. The one or more processing elements can be configured to measure a spatial distribution of reflected light intensity corresponding to the pixels of the light emitting layer that are overlaid by the input mechanism. The one or more processing elements can be configured to determine a spatial distribution of reflected light peaks from the distribution of reflected light intensity. The one or more processing elements can be configured to identify the input mechanism based on the spatial distribution of reflected light peaks.

The one or more processing elements can be configured to make multiple light intensity measurements at a first measurement frequency f₁ using light detectors that correspond to at least some of the pixels of the light emitting layer that are overlaid by the input mechanism, and the one or more processing elements can be configured to make multiple light intensity measurements at a second measurement frequency f₂ less than f₁ using light detectors that correspond to pixels that are not overlaid by the input mechanism.

The one or more processing elements can be configured to determine the position of the input mechanism relative to the light emitting layer based on the reflected light peaks. Alternatively, or in addition, the one or more processing elements can be configured to determine an orientation of the input mechanism relative to the light emitting layer based on the reflected light peaks.

The one or more processing elements can be configured to repeatedly determine the position of the input mechanism relative to the light emitting layer as the input mechanism is translated across a surface of the capacitive touch-sensitive layer. The one or more processing elements can be configured to adjust pixels of the light emitting layer based on the determinations of the input mechanism's position. Adjusting the pixels can include at least one of adjusting an amount of light transmitted by light emitting elements corresponding to one or more pixels of the light emitting layer, and adjusting an amount of light generated by light emitting elements corresponding to one or more pixels of the light emitting layer.

Each of the pixels can include at least one light detecting element. Each of the pixels can include at least one cell of liquid crystal material.

The light emitting elements can be organic light emitting diodes.

Each of the pixels in the light emitting layer can correspond to at least one of the electrodes in the capacitive touch-sensitive layer.

Implementations of the touch-sensitive display device can also include any one or more of the other features disclosed herein, as appropriate.

In a further aspect, the disclosure features a method of operating a touch-sensitive display device that includes a capacitive touch-sensitive layer having one or more electrodes, a light emitting layer having light emitting elements, and one or more light detecting elements, the method including: monitoring one or more electric fields associated with one or more of the electrodes of the capacitive touch-sensitive layer; based on monitoring the one or more electric fields associated with one or more of the electrodes of the capacitive touch-sensitive layer, identifying at least one change to at least one electric field associated with at least one of the one or more electrodes of the capacitive touch-sensitive layer; as a consequence of having identified at least one change to at least one electric field associated with at least one of the one or more electrodes of the capacitive touch-sensitive layer, determining a position of the input mechanism relative to the light emitting layer based on the one or more electrodes of the capacitive touch-sensitive layer for which changes to the electric fields associated with the one or more electrodes were identified; increasing an intensity of light emitted by one or more of the light emitting elements of the light emitting layer located in positions within the light emitting layer that correspond to the determined position of the input mechanism relative to the light emitting layer; receiving, from one or more of the light detecting elements, input conveying information about light that is incident on the one or more light detecting elements; and monitoring light reflected from the input mechanism based on the received input from the one or more light detecting elements.

Implementations of the method can include one or more of the following features.

Increasing an intensity of light emitted by one or more of the light emitting elements can include identifying regions of the light emitting layer that are overlaid by the input mechanism, and increasing the intensity of light emitted from light emitting elements that correspond to the overlaid regions.

The method can include adjusting a wavelength of light emitted from light emitting elements that correspond to the one or more of the light emitting elements of the light emitting layer located in positions that correspond to the determined position of the input mechanism. The method can include identifying the input mechanism based on the light reflected from the input mechanism. Identifying the input mechanism can include determining a spatial distribution of reflected light intensity from the input mechanism, determining positions of peaks in the spatial distribution of reflected light intensity, and identifying the input mechanism based on the peak positions. Identifying the input mechanism can include determining shapes of one or more peaks in the spatial distribution of reflected light intensity, and identifying the input mechanism based on the peak shapes. The method can include determining an orientation of the input mechanism based on the peak positions.

The method can include repeating the monitoring of one or more electric fields associated with the one or more of the electrodes of the capacitive touch-sensitive layer to determine the position of the input mechanism as the input mechanism is translated relative to the capacitive touch-sensitive layer.

The light emitting layer can be segmented into a plurality of pixels, and the method can include identifying one or more pixels overlaid by the input mechanism, and adjusting one or more of the overlaid pixels based on the identity of the input mechanism. Adjusting one or more of the overlaid pixels can include adjusting at least one of a wavelength and an intensity of light emitted by one or more of the overlaid pixels when the input mechanism no longer overlays the pixels.

The method can include repeating the receiving input from one or more of the light detecting elements and monitoring light reflected from the input mechanism, where the receiving includes receiving input from one or more light detecting elements that correspond to the overlaid regions at a first frequency f\, and receiving input from one or more light detecting elements that do not correspond to the overlaid regions at a second frequency f₂ less than f\. The method can include determining a position of the input mechanism relative to the light emitting layer based on the received input from the one or more of the light detecting elements.

Implementations of the method can also include any one or more of the other steps and/or features disclosed herein, as appropriate.

In addition, the materials, methods, and examples are illustrative only and not intended to be limiting.

The details of one or more implementations are set forth in the accompanying drawings and the description below. Other features will be apparent from the description, drawings, and claims.

### DESCRIPTION OF DRAWINGS

FIG. 1 is a schematic diagram of an implementation of a touch-sensitive display device.
-FIG. 2 is a cross-sectional view of an implementation of a touch-sensitive display device.
FIG. 3A is a schematic representation of an image of ambient and reflected light incident on a photosensitive layer of a display device.
FIG. 3B is a schematic representation of an image of reflected light from two different objects positioned on a touch-sensitive display device.
FIG. 4A is a schematic diagram of an example of a touch-sensitive display device including a photosensitive layer.
FIG. 4B is a top view of the photosensitive layer of the display device of FIG. 4A.
FIG. 4C is a schematic diagram showing electrical connections between various elements of the photosensitive layer of the display device of FIG. 4A.
FIG. 5 is a flow chart showing process steps that can be implemented to track one or more input mechanisms on a touch-sensitive display device.
FIG. 6A is a schematic representation of an image of reflected light from a drawing object on a photosensitive layer of a display device. FIGS. 6B-D are schematic representations of images of a drawing object modifying an image displayed by a touch-sensitive display device.
FIG. 7A is a schematic representation of an image of reflected light from an erasing object on a photosensitive layer of a display device.
FIGS. 7B-D are schematic representations of images of an erasing object modifying an image displayed by a touch-sensitive display device.
FIG. 8 is a flow chart showing process steps that can be implemented to detect and track one or more input mechanisms on a touch-sensitive display device.

### DETAILED DESCRIPTION

Touch screens are devices that combine both display and input functions. Typically, for example, a touch screen provides a graphical display that can be used to display various types of information to a system operator. Further, the touch screen functions as an input device that allows the operator to input information to the system via the touch screen. This information can be processed directly by the touch screen and/or can be communicated to another device connected to the touch screen.

A variety of different technologies can be used to drive graphical displays in touch screen devices. For example, in some implementations, matrix arrays such as active matrix arrays and/or passive matrix arrays can be used to drive a display. Examples of active matrix arrays and array-based display devices are disclosed, for example, in U.S. Patent No. 6,947,102. To prevent optical degradation of output images formed using such displays, the displays may be implemented without overlays. Such configurations may achieve a fixed, highly accurate correspondence between pixel coordinates for a displayed image, and pixel coordinates for a detected input device.

To identify input devices that either approach or contact the touch screen device, the active matrix arrays can include one or more optical sensors (e.g., photodiodes) to permit detection of light incident on the arrays. The optical sensors can be used to detect changes in ambient light passing through the active matrix that result from the shadowing effect of an object in proximity to, or in contact with, the touch screen device. Image processing algorithms can analyze the measured shadow patterns to identify specific types of input devices.

Using these techniques, touch screen devices can be used to identify a variety of different input mechanisms. For example, in some implementations, a touch screen device may be configured to detect a finger as an input mechanism and to enable a system operator to enter, select, change, or otherwise manipulate information on the display using his/her finger. In certain implementations, touch screen devices can detect and accept input from mechanisms other than a portion of an operator's hand. For example, touch screen devices can detect the presence of- and accept input from - objects that are placed in proximity to, or in contact with, the display device. Such objects can be discriminated from ordinary local variations in transmitted ambient light based on the shapes of the shadows that the objects produce (and which are detected by the optical sensors). In some implementations, the objects can also include fiducial markings that produce patterned variations in the amount of light that is reflected from the underside of the objects. By measuring the pattern of reflected light from the object's underside, particular objects with unique patterns of fiducial markings can be identified. As a result, touch screen devices can be configured to accept particular types of input from specific identified input objects. The devices can also be configured to modify displayed images in specific ways according to the identified input objects.

Factors such as the amount of illumination light available, the material from which the contacting object is formed, and the optical properties of various components of a display device can all influence the reliability and sensitivity with which a photosensitive detector can detect a "touch" event. Depending upon the environment in which a photosensitive sensor is used, reliability can be limited to a less than desirable level by one or more of these factors. In such implementations, other types of sensors can be combined with photosensitive sensors to yield a composite device with improved sensing reliability. To detect finger touch events, for example, where a finger may not be particularly highly reflective at wavelengths in the visible region of the spectrum, a photosensitive sensor can be combined with a second type of sensor specially adapted for touch sensing functionality. In this way, the two sensors can work cooperatively - and, in certain implementations, some or all of the touch sensing functionality can be performed with the second sensor. In some implementations, the same considerations can apply to sensing of objects other than fingers (e.g., objects formed of relatively low reflectivity materials).

In general, therefore, to expand the range of sensing capabilities of a touch screen device that includes a photosensitive sensor, one or more additional touch sensing sensors may be incorporated within the touch screen device. Touch sensing sensors can include, for example, a capacitive touch-sensitive sensor that can permit more sensitive detection of touch events and/or permit more accurate touch position information to be obtained than otherwise may be possible using only the photosensing capability of a photosensitive sensor. More generally, a capacitive touch sensing sensor can be used to determine when an input mechanism is either in close proximity to, or directly contacts, the display device. Touch sensing sensors can also include, for example, resistive touch-sensitive sensors, surface capacitive touch-sensitive sensors, and touch-sensitive sensors that include a waveguide layer and operate via frustrated total internal reflection, as discussed below.

Detecting and identifying objects using photosensitive sensors that rely on ambient light for object illumination can be difficult in some implementations. Such sensors typically operate in the visible region of the electromagnetic spectrum, while many candidate objects for detection occlude light (e.g., ambient light) in this spectral region. As a result, very little of the ambient light may reach the photosensitive sensor for detection purposes. In some implementations, the photosensitive layers disclosed herein can be used both to provide illumination light that illuminates objects that approach or touch the display device, and to measure reflected light from the objects (e.g., both illumination and detection occur on the same side of the object, typically on the opposite side from the viewer). Regions of the photosensitive layer that are overlaid by the object include light emitting elements; these elements can be used to illuminate the overlying object, since they are no longer needed for image formation while the object is present - they correspond to a portion of the image that is obscured by the object. In this way, the light emitting elements can be used to greatly increase the amount of illumination light available, facilitating measurement of detected light from the object, and making identification of the object on the basis of the measured light easier.

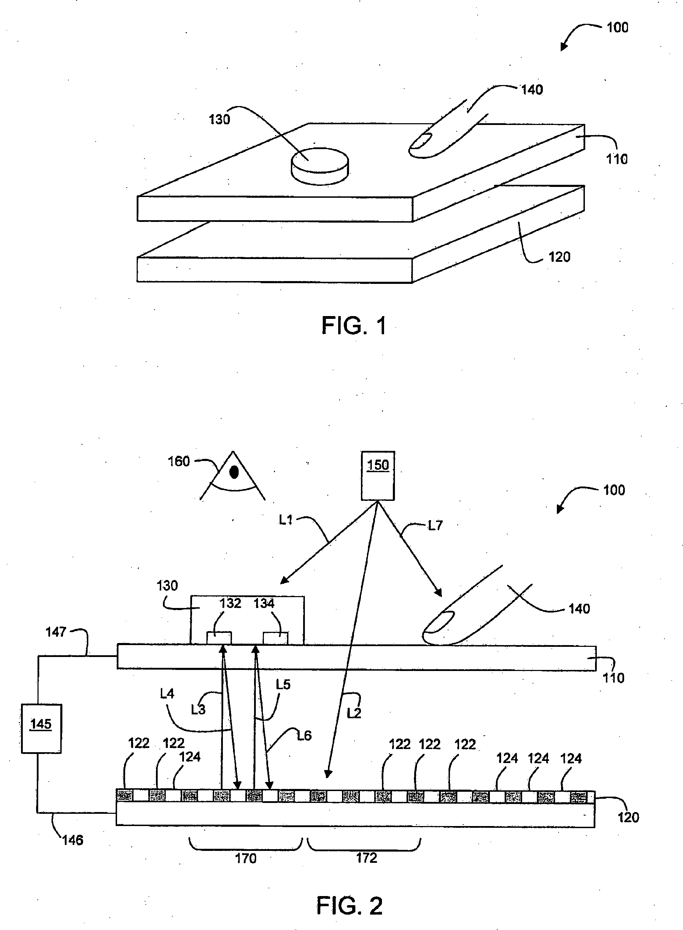

FIG. 1 shows an implementation of a touch screen device 100 that includes both a photosensitive light emitting/sensing layer 120 (e.g., a photosensitive active matrix) and a touch sensing capacitive layer 110. In touch screen device 100, touch sensing layer 110 is positioned atop light emitting/sensing layer 120. When an object 130 and/or a system operator's finger 140 contacts device 100, contact occurs with touch sensing layer 110 rather than with light emitting/sensing layer 120.

In general, touch sensing layer 110 can be implemented in a variety of ways. In some implementations, for example, touch sensing layer 110 can be a projected capacitive sensor. In such a sensor, an electrode or electrodes are excited by a time -varying electrical waveform and other nearby electrodes are used to measure capacitive coupling of the time-varying electrical waveform. When a finger of a system operator approaches one of the electrodes, the capacitive coupling between the electrode and its neighboring electrodes changes as a result of a change in capacitance of the electrode system induced by the presence of the finger. The change in capacitive coupling can be detected and can serve as an indicator of a close approach (or even a touch) of the operator's finger.

Examples of projected capacitive touch sensing layers are described, for example, in U.S. Provisional Patent Application Serial No. 61/255,276, filed on October 27, 2009. In such projected capacitive touch sensing layers, multiple electrodes are positioned within the touch sensing layer and an electronic processor is configured to monitor electrical potentials at electrodes. When the sensing layer is touched by a finger, the layer deforms, causing the capacitive coupling between certain electrodes (e.g., in the vicinity of the finger contact) to change. The changes in coupling are detected by the electronic processor.
In certain implementations, touch sensing layer 110 can include a waveguide layer as described in U.S. Patent Application Serial No. 1/833,908, filed on August 3, 2007, now published as U.S. Patent Application Publication No. US 2008/0029691.The waveguide layer can be coupled to a light source that directs radiation (e.g., infrared radiation) into the waveguide layer. Prior to contact with finger 140 or object 130, the radiation propagates through the waveguide layer, undergoing total internal reflection (TIR) at each of the waveguide surfaces. As a result, little or no radiation is coupled out of the waveguide. However, when finger 140 and/or object 130 contacts the waveguide layer, the waveguide layer deforms, frustrating TIR of the propagating radiation and causing some of the radiation to emerge from the waveguide layer at the point of contact. Device 100 can include a detector (e.g., a detector implemented in photosensitive layer 120, or a separate detector) that measures the radiation emerging from the waveguide layer, thereby determining the position at which the touch occurred.

In some implementations, touch sensing layer 110 can be implemented as a conventional surface capacitive sensing layer. Layer 110 can include an array of electrodes connected to an electronic processor that monitors capacitive coupling (e.g., as the electrical potential) at each electrode. When finger 140 and/or object 130 are brought into proximity with layer 110 (e.g., either in contact with layer 110 or just close to layer 110 without touching the layer), the capacitive coupling associated one or more of the electrodes can be dynamically changed. These changes in capacitive coupling can be detected by the electronic processor. In this manner, the position of finger 140 and/or object 130 can be determined.

Any of the above implementations of layer 110 can permit device 100 to distinguish between touch events that involve finger 140 and object 130. For example, changes in capacitive coupling caused by object 130 can be different in magnitude from changes in capacitive coupling caused by finger 140. Alternatively, or in addition, the pattern of electrode positions at which coupling changes occur can be used to distinguish between finger 140 and object 130. As a result, by using layer 110 to detect touch events, events that involve a touch by an operator's finger can be distinguished from events that involve a touch by an object.

Further, the position at which a touch event occurs (e.g., the position of finger 140 and/or object 130) may be more accurately obtained by sensing the touch using layer 110 rather than using layer 120. When layer 110 is implemented as a capacitive touch sensor, the position of finger 140 and/or object 130 generally is determined by layer 110 by sensing changes in the capacitive coupling of electrodes positioned within layer 110. Such changes result from the approach of finger 140 and/or object 130 toward layer 110 and, in some implementations, from the deformation of layer 110 in response to contact by finger 140 and/or object 130. The electronic processor connected to each of the electrodes can obtain a two-dimensional spatial map of the detected changes in capacitive coupling relative to the position coordinates of layer 110 to determine the position of finger 140 and/or object 130 in the coordinate system of layer 110. The spatial pattern of coupling changes can also be used to determine the shape of the surface of finger 140 and/or object 130 that contacts layer 110.

In contrast, when layer 120 is used to determine the position of finger 140 and/or object 130, the position determination is based on a shadowing effect produced by finger 140 and/or object 130 as it nears layer 110. That is, the optical sensors in layer 120 are configured to measure ambient light transmitted through layers 110 and 120. When finger 140 and/or object 130 - which are opaque (or at least not entirely transparent) to ambient light - approach layer 110, the amount of light reaching sensors in layer 120 that are overlaid by finger 140 and/or object 130 is reduced relative to the amount of light reaching other sensors in layer 120, due to occlusion of the ambient light by finger 140 and/or object 130. The shadow pattern thus produced on layer 120 can be measured and used to estimate both the position and shape of finger 140 and/or object 130. However, in some implementations, the edges of such shadows may not be sharply defined due to the position of finger 140 and/or object 130, the position and spatial profile of available ambient light, and other imaging aberrations. As a result, position and/or shape information may be not be as accurate as similar information obtained by sensing touch events using layer 110.

In some implementations, sensing information gleaned by both layers 110 and 120 can be combined to generate more information about an input mechanism than may be possible to glean by only one of layers 110 and 120 operating individually. For example, layer 110 can be used to detect touch events by finger 140 and/or object 130, and to determine the position of finger 140 and/or object 130 (e.g., the position at which the touch occurred) in the coordinate system of device 100. Layer 120 can then be used to determine the shape of the surface of finger 140 and/or object 130 that contacts layer 110 by measuring a two-dimensional spatial intensity distribution of ambient light incident on layer 120.

In some implementations, layer 120 can also be used to identify different types of objects 130 that contact layer 110. FIG. 2 shows a cross-sectional view of touch screen device 100. In FIG. 2, touch sensing layer 110 is positioned atop photosensitive matrix layer 120. Object 130 and finger 140 are both in contact with sensing layer 110. An ambient light source 150 provides ambient light. An observer 160 views images displayed by device 100. Electronic processor 145 is in electrical contact with light emitting elements 122 and light detecting elements 124 in layer 120 via communication line 146, and in electrical contact with electrodes in layer 110 via communication line 147.

Photosensitive layer 120 includes multiple light emitting elements 122 and multiple light detecting elements 124. Light detecting elements 124 can detect ambient light generated by source 150 that passes through layer 110. Light detecting elements 124 can also detect light generated by light emitting elements 122. Light detecting elements 124 can include, for example, detectors implemented as a multi-layer stack of semiconductor materials, and/or an array of photodiodes integrated onto a common substrate.

Light emitting elements 122 can be implemented in a variety of ways. For example, in some implementations, light emitting elements 122 are controlled by processor 145 and regulate an amount of light transmitted through layer 120 from a backlight positioned underneath layer 120 (e.g., on the side of layer 120 opposite layer 110). For example, light emitting elements 122 can include one or more layers of liquid crystals (e.g., as a cell of liquid crystal material) that function as optical waveplates to adjust a polarization direction of light propagating through layer 120. Light emitting elements 122 can also include one or more polarizing layers that transmit only light having a selected polarization orientation. In certain implementations, light emitting elements 122 can be formed as multilayer semiconductor devices configured to emit light under the control of processor 145. In some implementations, light emitting elements 122 are organic light emitting diodes fabricated on a substrate. Generally, each of light emitting elements 122 is independently addressable by electronic processor 145.

Light emitting elements 122 can generally be fabricated and/or configured to emit light in one or more desired regions of the electromagnetic spectrum. In some implementations, for example, light emitting elements 122 emit light in the visible region of the spectrum during operation of device 100. In certain implementations, light emitting elements 122 emit light in the infrared region of the spectrum. Further, in some implementations, light emitting elements 122 emit light in the ultraviolet region of the spectrum. In general, within each of the above-identified regions, light emitting elements 122 can be further configured to emit light within a relatively narrow range of wavelengths (e.g., a full-width at half maximum bandwidth of 20 nm or less, 15 nm or less, 10 nm or less, 5 nm or less, 2 nm or less), permitting the emission wavelength band of elements 122 to be carefully selected (e.g., to match the spectral sensitivity of detection elements 124).

Typically, layer 120 is organized into a series (e.g., a two-dimensional array) of pixels. Each pixel can include one or more light emitting elements 122. Particular pixels can include no light detecting elements 124, or one or more light detecting elements. The light emitting element(s) 122 in each pixel generate light that passes through layer 110 and is viewed by observer 160. Light emitted by each of the pixels in layer 120 collectively forms the image viewed by observer 160.

As shown in FIG. 2, ambient light source 150 (which can include, for example, one or more indoor lights, one or more outdoor lights, and/or the sun) provides light that is incident on object 130, on layer 110, and on finger 140. A portion of the ambient light propagating along direction L1 is incident on object 130. In contrast, a portion of the ambient light propagating along direction L2 is incident directly on layer 120. Object 130 is typically formed of a material that is opaque (or at least not entirely transparent) to the ambient light. As a result, the amount of ambient light detected by elements 124 in a region of layer 120 overlaid by object 130 (e.g., pixels in region 170) is reduced relative to an amount of ambient light detected by elements 124 in a region of layer 120 that is not overlaid by object 130 (e.g., pixels in region 172).

Some of the ambient light propagates along direction L7 and is incident on finger 140. Finger 140 occludes this ambient light. However, due to the orientation of finger 140 relative to layer 110 - such that much of the surface of finger 140 is spaced from layer 110 - the shadow of finger 140 produced on layer 120 and detected by elements 124 typically has edges that are more poorly-defined than the edges of the shadow of object 130, which has a much larger surface of contact with layer 110. As a result, estimation of the shape of finger 140 based on the measured two-dimensional distribution of occluded ambient light is more difficult than estimation of the shape of object 130.

Object 130 includes fiducial markings 132 and 134 that can be used to uniquely identify object 130. Typically, as discussed above, object 130 is formed from a material that is substantially opaque to ambient light. The material from which object 130 is formed has a reflectivity R1 that is a function of its inherent structure. Fiducial markings 132 and 134 are formed on the lower (e.g., contact) surface of object 130 from a second material with a reflectivity R2 that is larger than the reflectivity R1. As such, a distribution of reflected light from the lower surface of object 130 can be used to identify object 130 based on the position of local intensity maxima in the distribution.

When object 130 is placed in contact with layer 110, ambient light from source 150 is prevented from reaching pixels in layer 120 that object 130 overlies. Typically, object 130 produces a shadow image on layer 120 with relatively sharply-defined edges. As a result of the occlusive effect of object 130, the pixels that object 130 overlies (e.g., the pixels in region 170) do not form part of the image viewed by observer 160. As a result, device 100 no longer has to generate an image using the pixels in region 170 because observer 160 cannot see these pixels at the moment anyway. Instead, these pixels can be used to identify object 130.

To identify object 130, light emitting elements 122 are directed to emit light toward the underside of object 130. The emitted light passes through layer 110 as shown in FIG. 2. Upon reaching object 130, a portion of the emitted light propagating along direction L3 is incident on fiducial marking 132. Light reflected from fiducial marking 132 along direction L4 is detected by light detecting elements 124 in region 170. Similarly, a portion of the emitted light propagating along direction L5 is incident on object 130 (but not on a fiducial marking). Light reflected from object 130 along direction L6 is detected by elements 124 in region 170.

Light intensities measured by detecting elements 124 in region 170 are communicated to processor 145, which constructs a two-dimensional spatial intensity distribution corresponding to reflected light from the lower surface of object 130. Because fiducial markings 132 and 134 are formed of a material having a higher reflectivity R2 than the reflectivity R1 of object 130, light reflected from these markings will have higher intensity than light reflected from other regions of object 130. As a result, areas of the spatial intensity distribution that correspond to fiducial markings 132 and 134 will appear brighter (e.g., have higher intensity values) than areas of the distribution that correspond to the rest of object 130.

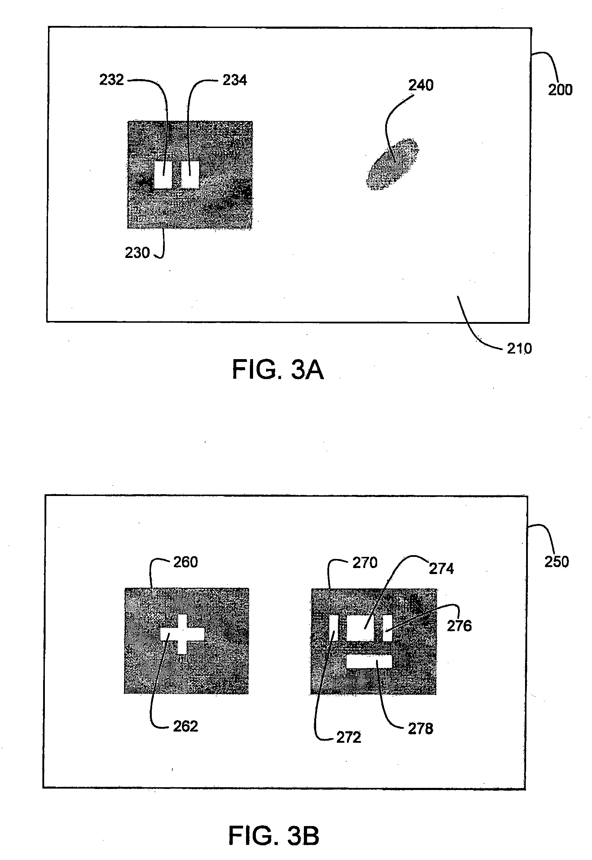

When specific fiducial markings are known to be present on object 130, these variations in the spatial intensity distribution can be used to identify object 130. FIG. 3A shows in schematic form an example of an image 200 of ambient and reflected light measured by light detecting elements 124 in layer 120, with object 130 and finger 140 both in contact with layer 110 as shown in FIG. 2. Image 200 includes regions 210 with approximately uniform intensity corresponding to ambient light that is transmitted directly through layer 110 and detected in layer 120. Image 200 also includes region 230 with well-defined edges. In the absence of emitted light from light elements 122 in region 170, region 230 would correspond to the shadow produced by occlusion of ambient light by object 130. However, light emitting elements 122 generate light that is incident on the underside of object 130. A portion of this incident light is reflected by object 130 and detected by elements 124. As a result, the brightness of region 230 relative to region 210 depends on the amount of reflected light from object 130 relative to the amount of ambient light occluded by object 130.

Within region 230 are regions 232 and 234 that have an average intensity that is greater than the average intensity of region 230. These regions correspond to fiducial markings 132 and 134, and are brighter due to the higher reflectivity of the material used to form the markings. Also present in image 200 is region 240, which corresponds to finger 140. The edges of region 240 are more poorly-defined than the edges of region 230 owing to the largely displaced and/or angled position of finger 140 relative to the surface of layer 110.

Fiducial markings 232 and 234 - which correspond to local maxima in the spatial distribution of light intensity shown in image 200 - can be used to identify object 130 if the position and/or shape of the markings is unique to object 130. Different objects that are placed in contact with layer 110 can have different patterns and shapes of fiducial markings, so that by measuring the spatial intensity distribution of light reflected from the bottom of each object and identifying the positions and/or shapes of peaks in the intensity distributions, different objects can be distinguished.

FIG. 3B shows a schematic image 250 of ambient and reflected light measured by layer 120 when two different objects are placed in contact with layer 110. The first object includes a fiducial marking in the shape of a cross, and corresponds to region 260 of the image, with the shape and position of the fiducial marking shown as region 262. The second object includes four fiducial markings arranged in a geometric pattern and corresponds to region 270 of the image; the four markings are shown as regions 272, 274, 276, and 278. It is apparent from image 250 that the objects are readily distinguishable based on the distribution of reflected light from the underside of each object.

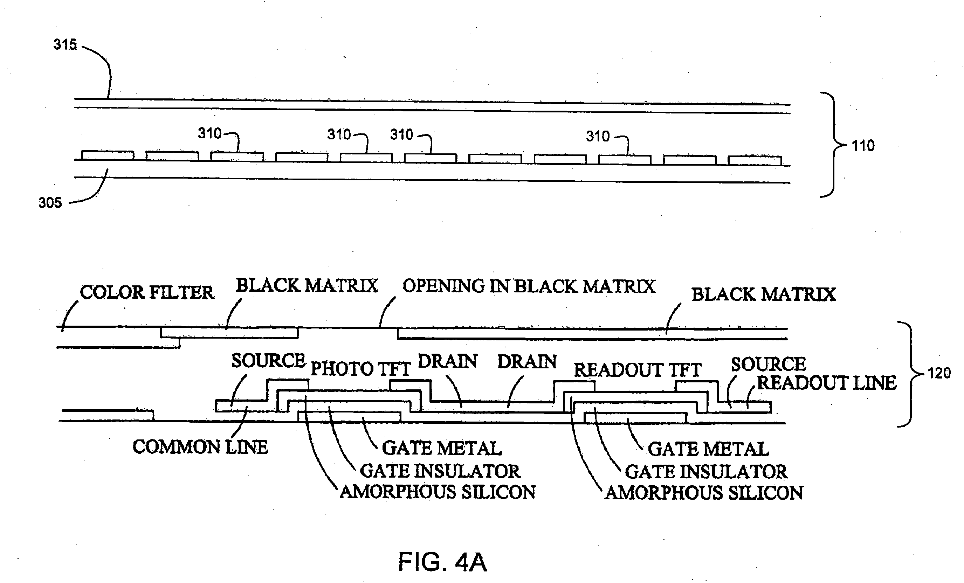

FIG. 4A shows the structure of an implementation of device 100 in more detail. As discussed above, device 100 includes both a touch sensing layer 110 and a photosensitive active matrix layer 120. Touch sensitive layer 110 includes a first substrate 305 and a second substrate 315. Multiple electrodes 310 are positioned on substrate 305, with electrodes pitch and spacing designed according to the required touch sensitivity and position accuracy of device 100. Electrodes 310 are electrically connected to processor 145 (not shown), which measures capacitive coupling between electrodes 310. As shown in FIG. 4A, device 100 is configured to generate substantially planar output display images, and electrodes 310 are disposed in a plane (e.g., a plane parallel to substrate 305) that is substantially parallel to the output display images. In general, a plane that is substantially parallel to a plane of the output display images is a plane oriented at an angle of 10 degrees or less (e.g,. 8 degrees or less, 6 degrees or less, 5 degrees or less, 4 degrees or less, 3 degrees or less, 2 degrees or less, 1 degree or less) with respect to the plane of the output display images.

To monitor and detect touching or near-approach events, electronic processor 145 is configured to detect changes in capacitive coupling between at least two electrodes 310. As shown in FIG. 4A, due to the separation and electrical potentials applied to each of electrodes 310, electric fields extend outward from each of electrodes 310. When a touching event occurs, the electric field configuration, and thus the capacitance between certain electrodes 310 is changed. Even if a touching event does not occur, however, if a system operator's finger makes a near-approach to electrodes 310, the proximity of the finger can be enough to change the electric fields associated with electrodes 310. The changes in electric field configuration or capacitive coupling are detected by processor 145 (e.g., processor 145 typically detects changes in coupled electrical waveforms), and used to determine the position (in the coordinate system of device 100) where the touch or near-approach occurred. In some implementations, the magnitude and/or spatial extent of the change in the capacitive coupling can be determined; this information can be used to infer the amount of pressure applied to substrate 315 (or, alternatively, the mass of the object that contacts substrate 315).

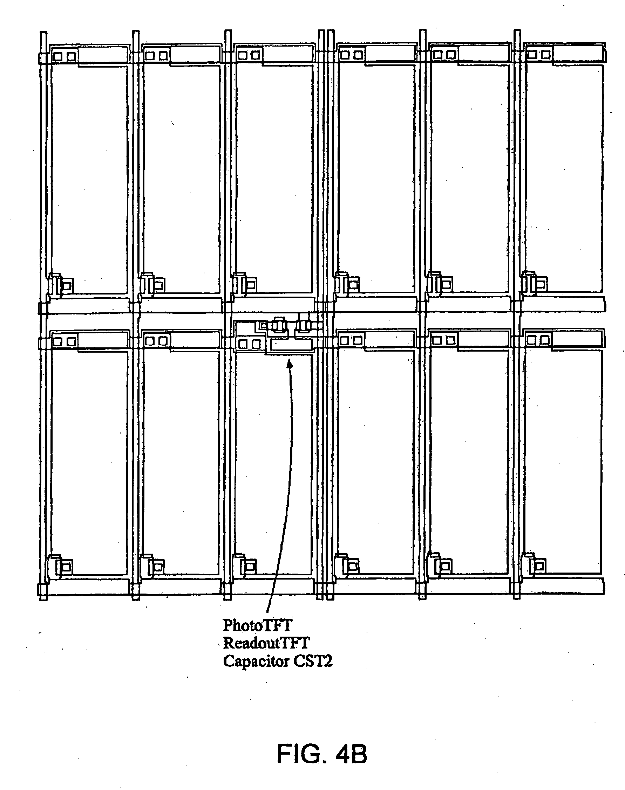

Also shown in FIG. 4A is an exemplary detailed structure of photosensitive layer 120. Further, FIG. 4B shows a top view of an implementation of layer 120. Photosensitive layer 120 includes a photosensitive thin film transistor (photo TFT) interconnected with a readout thin film transistor (readout TFT). Capacitor Cst2 is connected to a common line to both transistors. A relatively opaque black matrix overlies the readout TFT, and substantially prevents transmission of ambient light to certain portions of the readout TFT.

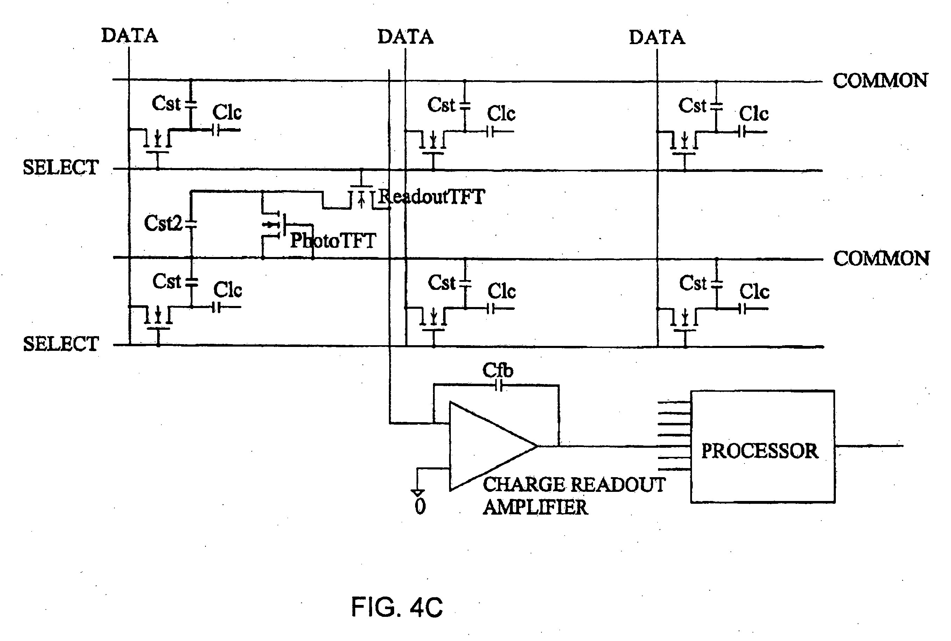

FIG. 4C is an exemplary schematic diagram showing electrical interconnections among various elements of the photosensitive layer. In FIG. 4C, the common line can be set at a negative voltage potential (e.g., -10 V) relative to a reference ground. During a prior readout cycle, a voltage imposed on the select line causes the voltage on the readout line to be coupled to the drain of the photo TFT and the drain of the readout TFT, producing a potential difference across Cst2. The voltage coupled to the drain of the photo TFT and the drain of the readout TFT is approximately ground with the non-inverting input of the charge readout amplifier connected to ground. The voltage imposed on the select line is removed so that the readout TFT will turn off.

During ordinary operation, ambient light passes through the display and strikes the photo TFT (e.g., typically formed of amorphous silicon). However, if a touch event occurs such that light is prevented from illuminating a region of the photo TFT, the photo TFT will be in an "off" state and the voltage across Cst2 will not significantly discharge through the photo TFT.

To determine the voltage across capacitor Cst2, a voltage is imposed on the select line which causes the gate of the readout TFT to interconnect the imposed voltage on Cst2 to the readout line. If the voltage imposed on the readout line as a result of activating the readout TFT is substantially unchanged, then the output of the charge readout amplifier will be substantially unchanged. In this manner, the device can determine whether the ambient light incident on the device has been occluded. If occlusion has occurred, the device determines that the screen has been touched at the portion of the display that corresponds with the photo TFT signal.

During the readout cycle, the voltage imposed on the select line causes the voltage on the drain of the photo TFT and the drain on the readout TFT to be coupled to the respective readout line; as a result, the potential difference across Cst2 is reset. The voltage imposed on the select line is removed so that the readout TFT will turn off. Thus, reading the voltage also resets the voltage for the next readout cycle.

The device can also operate to determine when a touch even does not occur. In this mode of operation, ambient light passes through the black matrix opening and strikes the photo TFT (e.g., typically formed of amorphous silicon). If no touch event occurs such that light is prevented from illuminating a region of the photo TFT through an opening in the black matrix, the photo TFT will be in an "on" state and the voltage across Cst2 will significantly discharge through the photo TFT, which is coupled to the common line. Accordingly, the voltage across Cst2 will be substantially changed in the presence of ambient light.

To determine the voltage across capacitor Cst2, a voltage is imposed on the select line which causes the gate of the readout TFT to interconnect the imposed voltage on Cst2 to the readout line. If the voltage imposed on the readout line as a result of activating the readout TFT is substantially changed or otherwise results in an injection of current, then the output of the charge readout amplifier will be substantially non-zero. The output voltage of the charge readout amplifier is proportional (or otherwise related) to the charge on Cst2. Thus, the device can determine whether the ambient light incident on the device has been occluded. If occlusion has not occurred, the device determines that the screen has not been touched.

In general, processor 145 can implement various image and data processing algorithms to identify, determine the position of, and track objects placed in proximity to, or in contact with, device 100. Further, processor 145 (which can also include a plurality of electrical processing elements) can adapt one or more parameters of the photosensing layer (e.g., parameters of detecting elements 124 and/or emitting elements 122) based on measured information from layers 110 and/or 120 to enhance the efficiency with which object 130 and/or finger 140 are detected and tracked. In some implementations, for example, the position of an object or a finger in contact with layer 110 can be determined based on image processing algorithms that identify shadow regions (e.g., region 230) in images such as image 200. Alternatively, or in addition, the identification of such regions can also be made based on measured changes in capacitive potential differences determined from electrodes in layer 110. Once such regions have been determined, they can be identified as particularly relevant for fiducial detection.

To track object 130 as it is translated along layer 110, processor 145 can implement a number of techniques to enhance tracking fidelity. For example, in some implementations, processor 145 can restrict the search for fiducial markings to the particularly relevant regions discussed above. In this way, the object's identity and position can be updated rapidly, even for a relatively large display device, by restricting the search for fiducial markings to relatively small areas of the display.

In some implementations, processor 145 can acquire data at different rates from different regions of the display device. For example, in regions that are identified as particularly relevant, light intensity measurements can be performed (e.g., using elements 124 in region 170) at a rate that is higher than the rate at which light intensity measurements are performed in other regions (e.g., region 172) of layer 120. The ratio of the rate of light intensity measurements in region 170 to the rate in region 172 can be 1.5:1 or more (e.g., 2:1 or more, 2.5:1 or more, 3:1 or more, 4:1 or more).

In certain implementations, processor 145 can identify regions of the display device that correspond to a finger touch event, and restrict these regions from fiducial searching. For example, processor 145 can determine regions corresponding to finger touch events based on changes in capacitive coupling (e.g., measured as changes in electrical potential) among electrodes in layer 110. Alternatively, or in addition, processor 145 can determine regions corresponding to finger touch events based on the measured spatial distribution of ambient and reflected light; typically, due to shadowing, regions that correspond to finger touches have poorly-defined edges, and have an average intensity that is greater than the average intensity of an object placed in direct contact with layer 110. Based on criteria such as these, areas of the display corresponding to finger touches can be identified and excluded for purposes of fiducial searching.

In some implementations, either or both of the light emitting elements and the light detecting elements can be configured to improve the sensitivity of fiducial marking detection. For example, in certain implementations, light detecting elements 124 can be configured for enhanced sensitivity at one or more selected wavelengths. The configuration can be static and can occur when elements 124 are fabricated. Alternatively, the spectral sensitivity profile of elements 124 can be adjustable, and processor 145 can be configured to adjust the profile during operation. By selecting a narrow spectral sensitivity profile, the effects of variations in ambient light intensity can be reduced, as light detecting elements 124 can be configured to be relatively insensitive to ambient light in all but a relatively narrow range of wavelengths. In particular, by selecting a particular spectral sensitivity profile, dependence upon the quality of ambient lighting in the environment in which device 100 operates can be significantly reduced and/or eliminated.

In some implementations, in response to detecting the presence (e.g., touch or near-contact) of an input mechanism, one or more of light emitting elements 122 can be adjusted to improve the sensitivity of detection elements 124 to the detected input mechanism. For example, processor 145 can configure elements 122 to emit light at particular wavelengths that correspond to high spectral sensitivity of detection elements 124. This configuration can be performed in a number of ways, depending upon the nature of elements 122. Where elements 122 transmit light generated by a backlight, for example, processor 145 can control an adjustable filter in optical communication with elements 122 to control the wavelengths of light transmitted. Where elements 122 generate light, the wavelengths of the generated light can be matched to the spectral sensitivity profile of detection elements 124 either during fabrication of elements 122, or dynamically during operation by processor 145, e.g., by adjusting driving voltages applied to elements 122 to shift the emission wavelength. In general, light emitting elements 122 can be connected to processor 145 through driving circuitry (not shown in FIG. 2), and processor 145 can be configured to apply voltages to light emitting elements 122 through the driving circuitry to adjust amount of light transmitted through, or generated by, light emitting elements 122.

Using the techniques described above, processor 145 can track the position and orientation of one or more objects, including objects having fiducial markings, (and therefore, the position, orientation, and identity of one or more objects) both when the objects are motionless on layer 110 and when the objects are translated across layer 110. For objects with dynamically adjustable fiducial markings, processor 145 can also measure other properties of the objects (as indicated by the changing fiducial markings) as a function of time.

In general, any of the configuration, measurement, and processing steps disclosed herein - including configuration of light emitting elements 122, configuration of detectors 124, measurement of light using detectors 124, measurement of capacitive coupling (e.g., as electrical potentials) between electrodes 310, and processing of images such as images 200 and 250 can be implemented in processor 145. Alternatively, any one or more of these steps can be performed by external hardware connected to device 100 and/or by a system operator.

In FIG. 2, processor 145 is shown schematically as being directly electrically connected to layer 110. In some implementations, however, additional hardware can be connected between processor 145 and layer 110. In particular, driving circuitry can be connected between processor 145 and layer 110, and can be used to generate electrical waveforms that are directed along "row" electrodes in layer 110. Sensing circuitry can be connected between processor 145 and layer 110, and in particular, between "column" electrodes in layer 110 and processor 145. To monitor changes in capacitive coupling, processor 145 can be configured to measure changes in potentials in the column electrodes when waveforms are sequentially applied to the row electrodes in layer 110. The sensing circuitry can function to amplify these changes, for example, and to convert the signal from analog to digital form.

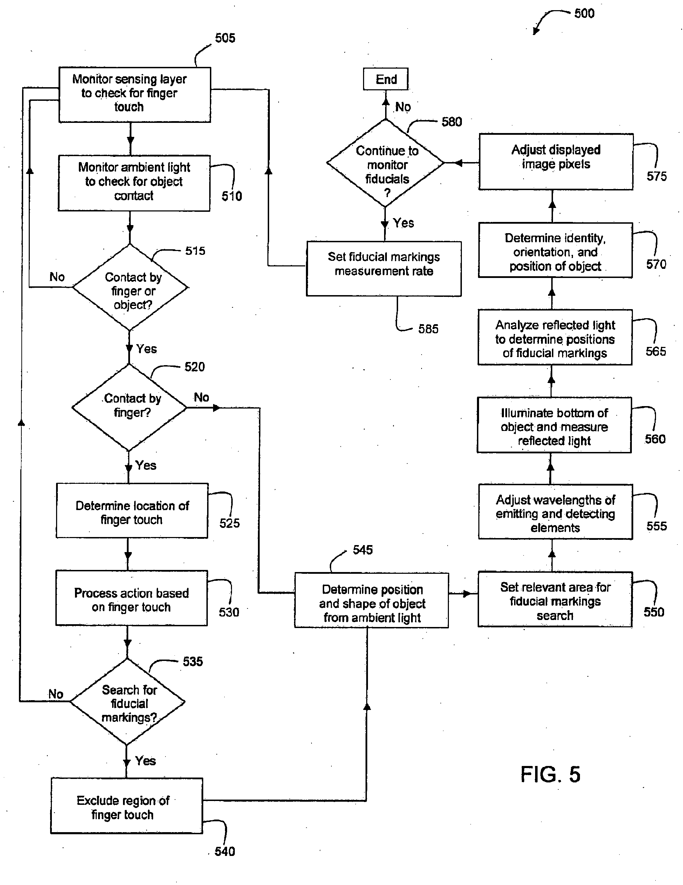

FIG. 5 shows a schematic diagram of a flow chart 500 that includes multiple steps involved in the detection and processing of touch events by device 100. In step 505, the capacitive couplings between electrodes in sensing layer 110 are monitored (e.g., by monitoring the electrical potentials of the electrodes) to determine whether a touch event has occurred. As discussed above, sensing layer 110 can be used to detect touch events arising from both finger contact and object contact with sensing layer 110; and in particular, sensing layer may provide enhanced sensitivity for the detection of finger touches. In step 510, the distribution of ambient light incident on photosensitive layer 120 is measured to provide additional information about contact between an operator's finger and/or an object and layer 110. In decision step 515, if a contact event involving either a finger or an object is not detected, then the process returns to step 505 and layers 110 and 120 are monitored again. If instead a contact event is detected, then the contact event is discriminated in step 520.

If a finger touch event is detected, then the process continues with step 525, in which the location of the finger touch is determined. As explained above, this determination can be based on detected changes in capacitive coupling between one or more pairs of electrodes in layer 110. Alternatively, or in addition, the location of the finger touch can be determined using shadow information derived from the measurement of the spatial distribution of ambient light detected in layer 120, from step 510. Information from step 510 can also be used to determine an approximate effective shape of the finger, as shown in FIG. 3A.

In step 530, the finger touch event is processed by device 100. Processing can include taking one or more actions based on the finger touch, including updating the image generated by layer 120, changing one or more values stored in a memory unit associated with processor 145, applying one or more algorithms to stored data values, and a variety of other actions. Following this processing step, decision step 535 determines whether the process should continue by searching for fiducial markings. If continuing the process is not desired, control returns to step 505. If instead the procedure calls for searching for fiducial markings (e.g., one or more object touches are detected in step 520), then the process continues at optional step 540.

In optional step 540, the region of layer 120 that corresponds to the position of the finger in the identified finger touch event can be excluded from the search for fiducial markings. Because a finger overlays this region of layer 120, fiducial markings due to another input mechanism (such as object 130) may not be found there. Thus, to save computational and measurement time, the overlaid region of layer 120 can be excluded, and the search for fiducial markings can proceed only in regions of layer 120 that are not overlaid by a finger.

Next, in step 545, the position and shape of an object in contact with layer 110 are determined from the ambient light distribution measured in step 510. This position and shape information is used to set the relevant area for searching for fiducial markings in step 550 (e.g., the relevant area of layer 120 corresponds to the pixels that are overlaid by the object - region 170 in FIG. 2, as discussed previously). Then, in optional step 555, light emitting elements 122 and/or light detecting elements 124 can be configured for measurement of reflected light from the surface of the object that contacts layer 110. This configuration, as discussed above, can include adjustment of the intensity of light emitted by elements 122, the spectral distribution of light emitted by elements 122, and the spectral sensitivity profile of detection elements 124, as discussed above.

Next, in step 560, the underside of the object is illuminated with light from elements 122 within region 170, and light reflected from the contact surface of the object is measured using detecting elements within region 170. In step 565, the measured two-dimensional distribution of reflected light is analyzed to determine the positions, shapes, and relative orientations of the higher intensity peaks and/or features in the distribution. From these peaks and features, the number and shapes of fiducial markings, and their orientations relative to the coordinate system of device 100, are determined. In step 570, the object is identified based on the detected fiducial markings in step 565. Further, the position and orientation of the object is determined relative to the coordinate system of device 100 based on the fiducial markings.

A variety of different objects can be placed in contact with layer 110 and identified. For example, in some implementations, the identified object can be a drawing object analogous to a pen or pencil having specific fiducial markings identifying the object as a drawing object. In certain implementations, the identified object can be an erasing object analogous to an eraser having specific fiducial markings identifying the object as an erasing object. In step 575, the image displayed by layer 120 to observer 160 can optionally be updated based on the type of object identified. For example, if the identified object is a drawing object, some or all of the pixels underlying the object can be configured so that light emitting elements within the pixels emit a particular color and/or intensity of light corresponding to the symbolic act of "drawing" on device 100. As another example, if the identified object is an erasing object, some or all of the pixels underlying the object can be configured so that light emitting elements within the pixels emit a particular color and/or intensity of light corresponding to the symbolic act of "erasing" a portion of an image displayed by device 100.

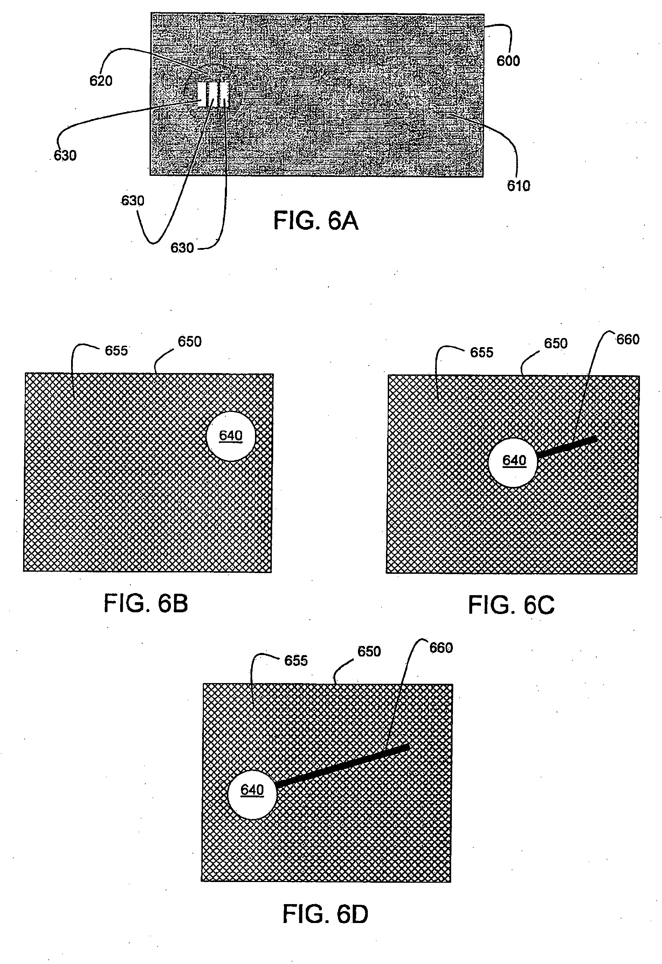

The process of tracking a drawing object and modifying pixels of an image displayed by device 100 as the drawing object is translated is shown in FIGS. 6A-D. FIG. 6A shows a schematic diagram of an image 600 of ambient and reflected light obtained from measurements by detecting elements 124 in layer 120. Image 600 includes a region 610 corresponding to ambient light that passes through layer 110 and is incident directly on layer 120. Image 600 also includes a region 620 that corresponds to reflected light from the bottom of a drawing object in contact with layer 110. Within region 620 are multiple brighter regions 630 that correspond to fiducial markings formed of a high-reflectivity material. By analyzing image 600, processor 145 can identify the object as a drawing object (e.g., on the basis of fiducial markings 630).

FIG. 6B shows a top view of the drawing object 640 placed atop the display screen 650 of device 100. A cross-hatched image pattern 655 is displayed on screen 650. As drawing object 640 is translated across display screen 650 in FIGS. 6C and 6D, pixels in the displayed image pattern 655 are adjusted according to the position of object 640. More specifically, because object 640 is a drawing object, pixels of image pattern 655 are adjusted to reflect the symbolic act of "drawing" with object 640 on image pattern 655; the image pixels, in addition to continuing to represent the cross-hatched pattern, also represent a line 660 that follows the position track of drawing object 640. In this manner, object 640 can be used to "draw" on screen 650 according to its position.

In some implementations, for example, drawing object 640 can be a stylus or another type of pen- or pencil-shaped object. The stylus can have reflective fiducial markings on its lower surface that are detected and tracked as the stylus moves across the surface of layer 110. Although a light-emitting stylus can be used as a drawing object, device 100 also permits the use of a non-emitting stylus, simplifying the overall operation of the device and enabling a wider variety of different drawing objects to be used.

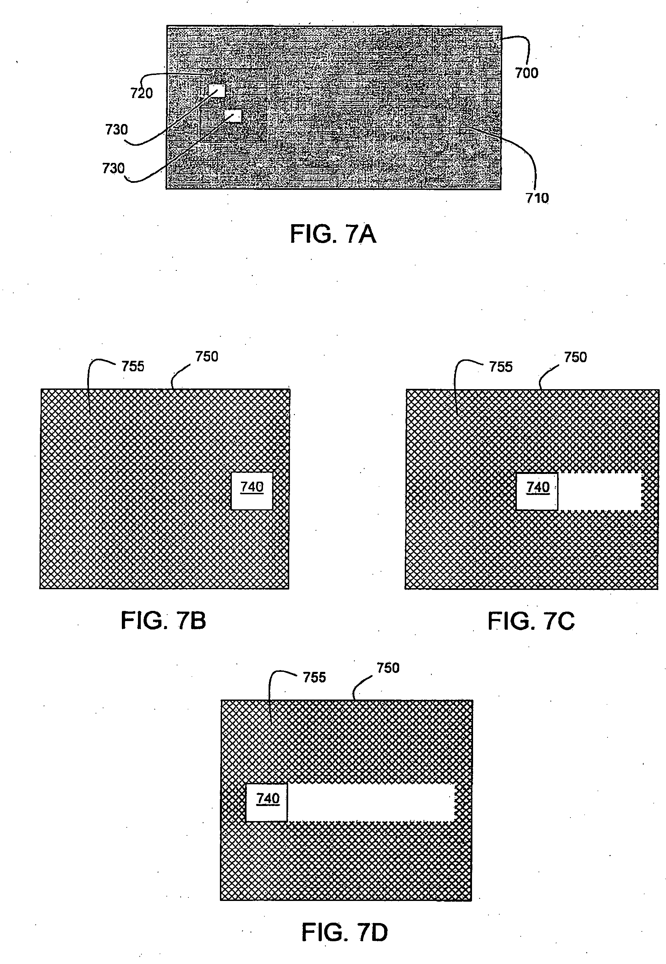

Similarly, the process of tracking an erasing object and modifying pixels of an image displayed by device 100 as the erasing object is translated is shown in FIGS. 7A-D. FIG. 7A shows a schematic diagram of an image 700 of ambient and reflected light obtained from measurements by detecting elements 124 in layer 120. Region 710 corresponds to ambient light that passes through layer 110 and is incident directly on layer 120. Region 720 corresponds to reflected light from the bottom of an erasing object in contact with layer 110. Regions 730 within region 720 correspond to fiducial markings on the bottom (contact) surface of the erasing object, and appear brighter than region 720 due to the high-reflectivity material from which they are formed. The erasing object can be identified by processor 145 based on the observed fiducial markings.

FIG. 7B shows a top view of the erasing object 740 placed atop display screen 750 of device 100. A cross-hatched image pattern 755 is displayed on screen 750. As erasing object is translated across display screen 750 in FIGS. 7C and 7D, pixels in the displayed image pattern 755 are adjusted according to the position of object 740. Because object 740 is an erasing object, pixels of image pattern 755 are adjusted to reflect the symbolic act of "erasing" a portion of pattern 755 as object 740 is moved. The blank region in pattern 755 that follows the movement of object 740 across screen 750 corresponds to the erasing action. In this manner, object 740 can be used to "erase" images displayed on screen 750 according to its position.

Returning to FIG. 5, in step 580, the process terminates if continued monitoring of the position of the object is not desired. If continued monitoring is desired, however, the process can continue by optionally setting the fiducial marking measurement rate in step 585. As discussed above, processor 145 can measure ambient light at different rates in different spatial locations according to the identified relevant areas for fiducial marking searching in step 550. Following this optional configuration step, control returns to step 505, where both layers 110 and 120 are monitored to detect touch events.

Either or both of steps 505 and 510 can generally involve one or more measurements. For example, monitoring layer 110 for changes among electrodes can involve making one or more measurements of capacitive coupling between pairs of electrodes (e.g., via voltage measurements for the electrodes). Similarly, monitoring layer 120 to measure ambient light incident on layer 120 can include making one or more measurements of ambient light intensity. In some implementations, where differential rates are selected for scanning relevant areas for fiducial markings, different numbers of measurements of ambient light intensity can be performed for different regions of layer 120.

The process shown in flow chart 500 includes an exemplary process in step 515 for distinguishing between contact or near-contact by a finger or by another object. More generally, the process in step 515 can be used to distinguish between several different types of input mechanisms. For example, in some implementations, the process in step 515 can distinguish between different non-finger input mechanisms (e.g., different objects 130) and can take different actions depending upon which object is identified. In certain implementations, the process in step 515 can distinguish between recognized input mechanisms (e.g., objects with fiducial markings) and other objects that are not recognized (e.g., objects without fiducial markings). In some implementations, process 515 can distinguish among several different classes of input mechanisms (e.g., finger, recognized objects, unrecognized objects) and can take different actions based on contact or near-contact events that occur with members of any of these classes. Further, different actions can be taken, for example, when multiple members of the same class (e.g., two or more different objects with fiducial markings) are identified.

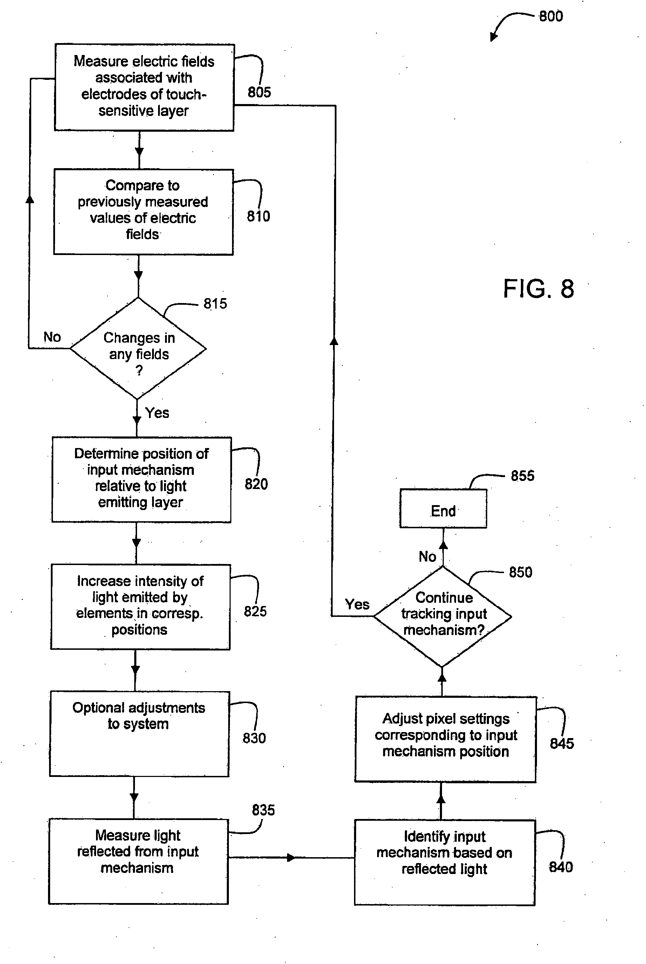

FIG. 8 shows a flow chart 800 that includes multiple steps involved in a process for detecting contact or near-approach of an input mechanism to a sensing layer, and for (optionally) tracking the input mechanism across the sensing layer. In the first step 805, electronic processor 145 (and/or additional processing elements) measures electric fields associated with electrodes 310 a capacitive touch-sensitive layer such as layer 110. These electric field measurements can take the form of measurements of potential differences, for example, that reflect changes in capacitive coupling between electrodes. The measured values can also be stored in a memory unit connected to processor 145.

In step 810, the newly measured electric field values are compared to previously measured values of the electric fields (e.g., measured field values previously stored in the memory unit). In step 815, if no changes in the electric field values are measured, then control returns to step 805; in this case, no input mechanism is in sufficient proximity to the sensing layer to be detected. However, if changes in one or more of the electric field values are detected, control passes to step 820. In step 820, processor 145 determines on the basis of the changed electric field value(s) the position of the input mechanism with respect to the light emitting layer (e.g., layer 120). In some implementations, step 420 can also include determination of the position of the input mechanism based - at least in part - on ambient light detected by light detecting elements 124 in layer 120, as discussed previously.

Following the determination of the position of the input mechanism, light emitting elements 122 in layer 120 that correspond to the position of the input mechanism are identified in step 425, and the amount of light emitted by these elements is increased. Increasing the amount of light emitted can be accomplished in a number of ways, depending upon the nature of the light emitting elements. When light emitting elements 122 are transmissive and configured to individually control an amount of transmitted light from a separate backlight source, as in a conventional liquid crystal display, light emitting elements 122 can be adjusted by processor 145 to permit more light to be transmitted by applying suitable voltages to driving circuitry associated with the elements. When light emitting elements 122 generate light (e.g., when light emitting elements are diodes such as organic light emitting diodes), processor 145 can increase the amount of light generated from the elements by supplying suitable driving currents to the diodes (e.g., through driving circuitry). Thus, light emitting elements 122 of many different types can be adjusted in step 425 to increase the amount of light emitted from the elements and incident on the contact surface of the input mechanism.

In optional step 430, processor 145 can be configured to perform one or more adjustments of device 100 (e.g., adjustments of parameters associated with device 100) to enhance detection and/or tracking of the input mechanism. In general, a wide variety of adjustments can be made. For example, in some implementations, algorithms that search for fiducial markings can be restricted to the areas of the display that correspond to the positions of the input mechanism(s). This area can be determined on the basis of the measured changes in electric fields, as discussed above, and/or can be determined on the basis of ambient light measurements performed by light detecting elements 124 in layer 120.

In some implementations, the measurement frequency at which measurements of reflected light are made in the areas of layer 120 corresponding to the positions of the input mechanism(s) can be increased relative to the rate at which ambient/reflected light measurements are made in other areas of layer 120. Alternatively, or in addition, the measurement frequency at which measurements of reflected light are made in the areas of layer 120 corresponding to the positions of the input mechanism(s) can be increased relative to the rate at which the electric fields between electrodes in layer 110 are measured in step 805. These adjustments are designed to allow rapid tracking and updating of the position, orientation, and state (e.g., where the input mechanism's fiducial markings can change over time) of the input mechanism as it is moved across layer 110.

In certain implementations, processor 145 can increase the integration time for measurement of reflected light from the input mechanism by detecting elements 124 in layer 120. Increasing the integration time permits tracking the input mechanism with a high dynamic range and/or in low light conditions. Further, in some implementations, processor 145 can electronically shutter some or all of detection elements 124 in a pattern that corresponds to the recognized fiducial markings on the input mechanism.

In some implementations, processor 145 can be configured to turn off the display functions of pixels in layer 120 corresponding to the position of the input mechanism. When the input mechanism approaches or contacts layer 110, corresponding pixels in layer 120 are obscured by the input mechanism and are no longer observable by a viewer. By turning off the display functions of such pixels (e.g., by preventing light emitting elements in such pixels from emitting light corresponding to the image displayed by device 100), a certain amount of processing and display time is saved. Further, the same corresponding pixels can be configured for increased light emission, as discussed above in connection with step 825, to aid in the detection of fiducial markings on the bottom of the input mechanism.

In certain implementations, processor 145 can adjust the wavelength(s) of light emitted by the light emitting elements 122 in step 825 that correspond to the position of the input mechanism to match wavelengths for which light detecting elements 124 have high spectral sensitivity. The adjustment of the wavelengths of emitted light can be performed in a number of ways, depending upon the nature of light emitting elements 122. When layer 120 is a liquid crystal display layer with a backlight that generates light and elements 122 control the amount of light transmitted at specific pixel locations in the display layer, the backlight is typically a white light source (e.g., a white light emitting diode-based source and/or a cold cathode fluorescent source). If detecting elements 124 are based on hydrogenated amorphous silicon, they have relatively high sensitivity at the red edge of the visible region of the electromagnetic spectrum, and in the near-infrared region of the spectrum. Accordingly, processor 145 can turn on only the red pixels of light emitting elements 122 by sending appropriate control signals to each of the elements. In this manner, red light can be preferentially incident on the bottom of the input mechanism where it is reflected and subsequently detected by elements 124. For displays that include a backlight with red, green, and blue light emitting diodes (LEDs), processor 145 can turn on only the red diodes, thereby directing only red light to be incident on the input mechanism where is it reflected and detected by elements 124. Similarly, for displays that include organic light emitting diodes (OLEDs), processor 145 can adjust the diodes so that only red OLEDs emit light that is reflected from in the input mechanism and detected by elements 124.

In some implementations, to provide even more light from light emitting elements to further facilitate detection of fiducial markings (as discussed in connection with step 825), device 100 can include additional light sources (e.g., located in the backlight of a LED-based display, or behind a semi-transparent OLED-based backlight). For example, the additional light sources can be configured to emit light at near-IR wavelengths, where detecting elements 124 may be particularly sensitive. Processor 145 can be configured to activate these additional light sources in response to the detection of the input mechanism to provide additional light for further detection and tracking of the input mechanism. The use of light in regions where detecting elements 124 have relatively high sensitivity (e.g., in the near-IR region) may be particularly useful for detecting and tracking drawing objects formed of nonconducting materials such as different stylus writing instruments.

In the next step 835 of flow chart 800, reflected light from the input mechanism is measured (e.g., by detecting elements 124 that correspond to the position of the input mechanism relative to layer 120). Based on this reflected light, processor 145 obtains a spatial distribution of reflected light corresponding to the contact surface of the input mechanism, and identifies any fiducial markings on the contact surface of the input mechanism (e.g., as bright regions in the spatial distribution of reflected light) in step 840. The characteristic pattern of fiducial markings can then be used to identify the input mechanism, determine its orientation relative to layer 110, and/or to determine state information about the input mechanism.

Next, in optional step 845, individual pixels of layer 120 that correspond to the position of the input mechanism can be adjusted so that their display attributes when they are no longer covered by the input mechanism are different from their attributes before they were covered by the input mechanism. In certain implementations, for example, one or more of the brightness and color of the pixels can be adjusted based on the input mechanism. As discussed above in connection with FIGS. 6A-D and 7A-D, display pixels can be adjusted to reflect symbolic actions such as drawing and/or erasing by the input mechanism.

In step 850, if continued tracking of the input mechanism is desired, control returns to step 805. Finally, if tracking of the input mechanism is finished and no further monitoring or detection of touch or near-contact events is desired, the process terminates at step 855.

The steps described above in connection with various methods for collecting, processing, analyzing, interpreting, and displaying information can be implemented in computer programs using standard programming techniques. Such programs are designed to execute on programmable computers or specifically designed integrated circuits, each comprising an electronic processor, a data storage system (including memory and/or storage elements), at least one input device, and at least one output device, such as, for example a display or printer. The program code is applied to input data (e.g., measurements of capacitive coupling, measurements of ambient light intensity, and/or measurements of reflected light intensity from objects) to perform the functions described herein. Each such computer program can be implemented in a high-level procedural or object-oriented programming language, or an assembly or machine language. Furthermore, the language can be a compiled or interpreted language. Each such computer program can be stored on a computer readable storage medium (*e.g.,* CD ROM or magnetic diskette) that when read by a computer can cause the processor in the computer to perform the analysis and control functions described herein.

A number of implementations have been described. Nevertheless, it will be understood that various modifications may be made. Accordingly, other implementations are within the scope of the following claims.

## Claims

1. A touch-sensitive display device (100), comprising:
a light emitting layer (120) including light emitting elements (122) configured to generate an output display image and light detecting elements (124), wherein the light emitting layer is segmented into a plurality of pixels, each pixel including at least one of the light emitting elements;
a capacitive touch-sensitive layer (110) including one or more electrodes (310);
driving circuitry for driving the light emitting elements (122) to generate an output display image; and
one or more electronic processing elements (145) configured to:
identify output received from one or more of the light detecting elements (124);
identify output received from at least one of the electrodes (310); and based on at least one of the identified outputs, determine a position of an input mechanism (130, 140) in proximity to the touch-sensitive display device (100),
wherein the one or more electronic processing elements (145) configured to determine the position of the input mechanism (130, 140) in proximity to the touch-sensitive display device (100) include an electronic processing element configured to:
detect a change in at least one electric field or in capacitive coupling associated with at least one of the electrodes (310); and
determine the position of the input mechanism (130, 140) in proximity to the touch-sensitive display device (100) as a consequence of having detected a change in at least one electric field or in capacitive coupling associated with at least one of the electrodes (310), wherein one or more pixels of the light emitting layer (120) are identified that are overlaid by the input mechanism (130, 140) based on the detected change in at least one electric field or in capacitive coupling associated with at least one electrode (310), and
wherein the one or more processing elements (145) are further configured to:
control the driving circuitry to cause at least some of the light emitting elements corresponding to the one or more pixels of the light emitting layer (120) determined to be overlaid by the input mechanism (130, 140) to emit increased amounts of light; and
detect light reflected from the input mechanism (130, 140) by detecting light using light detectors corresponding to at least some of the pixels of the light emitting layer (120) that are overlaid by the input mechanism (130, 140).

2. The device of claim 1, wherein the light emitting layer (120) is segmented into a plurality of pixels, each pixel including at least one light emitting element, wherein at least some of the pixels include at least one light detecting element, or wherein each of the pixels in the light emitting layer (120) corresponds to at least one of the electrodes in the capacitive touch-sensitive layer (110).

3. The device of claim 1, wherein the capacitive touch-sensitive layer (110) includes a common electrode spaced from each of the one or more electrodes, wherein the one or more electronic processing elements configured to determine the position of the input mechanism in proximity to the touch-sensitive display device (100) include an electronic processing element configured to detect relative changes in an electrical potential difference between at least one of the electrodes and the common electrode during operation of the device, wherein the one or more electronic processing elements (145) configured to determine the position of the input mechanism (130, 140) in proximity to the touch-sensitive display device (100) include an electronic processing element configured to determine the position of the input mechanism in proximity to the touch-sensitive display device (100) as a consequence of having detected a relative change in the electrical potential difference between the at least one electrode and the common electrode during operation of the device.

4. The device of claim 1, wherein the one or more electronic processing elements (145) configured to determine the position of the input mechanism (130, 140) in proximity to the touch-sensitive display device (100) include an electronic processing element configured to: detect relative changes in amounts of ambient light incident on one or more of the light detecting elements based on output received from one or more light detecting elements; and determine the position of the input mechanism (130, 140) in proximity to the touch-sensitive display device as a consequence of having detected a relative change in an amount of ambient light incident on one or more of the light detecting elements.

5. The device of claim 4, wherein the one or more electronic processing elements configured to determine the position of the input mechanism (130, 140) in proximity to the touch-sensitive display device (100) include an electronic processing element configured to: detect relative changes in amounts of ambient light incident on particular light detecting elements based on output received from the particular light detecting elements; and determine a shape of a surface of the input mechanism (130, 140) in proximity to the touch-sensitive display device (100) based on the particular light detecting elements for which relative changes in amounts of incident ambient light were detected.

6. The device of claim 1, wherein the one or more processing elements (145) are configured to measure a spatial distribution of reflected light intensity corresponding to the pixels of the light emitting layer (120) that are overlaid by the input mechanism (130, 140), wherein the one or more processing elements (145) are configured to determine a spatial distribution of reflected light peaks from the distribution of reflected light intensity, and wherein the one or more processing elements (145) are configured to identify the input, mechanism (130, 140) based on the spatial distribution of reflected light peaks.

7. The device of claim 1, wherein the one or more processing elements are configured to make multiple light intensity measurements at a first measurement frequency f₁ using light detectors that correspond to at least some of the pixels of the light emitting layer (120) that are overlaid by the input mechanism (130, 140), and wherein the one or more processing elements are configured to make multiple light intensity measurements at a second measuremen frequency f₂ less than f₁ using light detectors that correspond to pixels that are not overlaid by the input mechanism (130, 140).

8. The device of claim 6, wherein the one or more processing elements (145) are configured to determine the position of the input mechanism (130, 140) relative to the light emitting layer based on the reflected light peaks.

9. The device of claim 6, wherein the one or more processing elements (145) are configured to determine an orientation of the input mechanism (130, 140) relative to the light emitting layer based on the reflected light peaks.

10. The device of claim 8, wherein the one or more processing elements (145) are configured to repeatedly determine the position of the input mechanism (130, 140) relative to the light emitting layer as the input mechanism (130, 140) is translated across a surface of the capacitive touch-sensitive layer.

11. The device of claim 10, wherein the one or more processing elements (145) are configured to adjust pixels of the light emitting layer (120) based on the determinations of the input mechanism's position, and wherein adjusting the pixels includes at least one of adjusting an amount of light transmitted by light emitting elements corresponding to one or more pixels of the light emitting layer (120), and adjusting an amount of light generated by light emitting elements corresponding to one or more pixels of the light emitting layer (120).

12. A method of operating a touch-sensitive display device (100) that includes a capacitive touch-sensitive layer (1.10) having one or more electrodes (310), a light emitting layer (120) having light emitting elements (122), and one or more light detecting elements (124), the method comprising:
monitoring one or more electric fields or capacitive coupling associated with one or more of the electrodes (310) of the capacitive touch-sensitive layer (110);
based on monitoring the one or more electric fields or the capacitive coupling associated with one or more of the electrodes (310) of the capacitive touch-sensitive layer (110), identifying at least one change to at least one electric field or capacitive coupling associated with at least one of the one or more electrodes (310) of the capacitive touch-sensitive layer (110);
as a consequence of having identified at least one change to at least one electric field or capacitive coupling associated with at least one of the one or more electrodes (310) of the capacitive touch-sensitive layer (110), determining a position of an input mechanism (130, 140) relative to the light emitting layer (120) based on the one or more electrodes (310) of the capacitive touch-sensitive layer (110) for which the change to the electric field or the capacitive coupling associated with the one or more electrodes (310) was identified;
increasing an intensity of light emitted by one or more of the light emitting elements (122) of the light emitting layer (120) located in positions within the light emitting layer (120) that correspond to the determined position of the input mechanism (130, 140) relative to the light emitting layer (120);
receiving, from one or more of the light detecting elements (124), input conveying information about light that is incident on the one or more light detecting elements (124); and,
monitoring light reflected from the input mechanism (130, 140) based on the received input from the one or more light detecting elements (124).

13. The method of claim 12, wherein increasing an intensity of light emitted by one or more of the light emitting elements includes identifying regions of the light emitting layer (120) that are overlaid by the input mechanism (130, 140), and increasing the intensity of light emitted from light emitting elements that correspond to the overlaid regions.

14. The method of claim 12, further including identifying the input mechanism (130, 140) based on the light reflected from the input mechanism (130, 140), wherein identifying the input mechanism (130, 140) includes determining a spatial distribution of reflected light intensity from the input mechanism, determining positions of peaks in the spatial distribution of reflected light intensity, and identifying the input mechanism (130, 140) based on the peak positions, and wherein identifying the input mechanism (130, 140) includes determining shapes of one or more peaks in the spatial distribution of reflected light intensity, and identifying the input mechanism (130, 140) based on the peak shapes.

## Patentansprüche

1. Berührungsempfindliche Anzeigevorrichtung (100), umfassend:
eine Lumineszenzschicht (120) mit Lumineszenzelementen (122), die zum Erzeugen einer grafischen Ausgabedarstellung gestaltet sind, und Lichterfassungselementen (124), wobei die Lumineszenzschicht in eine Vielzahl von Bildpunkten unterteilt ist, wobei jeder Bildpunkt wenigstens eines der Lumineszenzelemente enthält;
eine kapazitive, berührungsempfindliche Schicht (110) mit einer oder mehreren Elektroden (310);
Treiberschaltung zur Ansteuerung der Lumineszenzelemente (122) zum Erzeugen einer grafischen Ausgabedarstellung; und
ein oder mehrere elektronische Verarbeitungselemente (145), die gestaltet sind, um:
eine von einem oder mehreren der Lichterfassungselemente (124) empfangene Ausgabe zu erkennen;
eine von wenigstens einer der Elektroden (310) empfangene Ausgabe zu erkennen; und auf wenigstens einer der erkannten Ausgaben basierend eine Position eines Eingabemechanismus (130, 140) in der Nähe zur berührungsempfindlichen Anzeigevorrichtung (100) festzulegen,
wobei das eine oder mehrere elektronische Verarbeitungselemente (145), die zum Festlegen der Position des Eingabemechanismus (130, 140) in der Nähe zur berührungsempfindlichen Anzeigevorrichtung (100) gestaltet sind, ein elektronisches Verarbeitungselement enthalten, das gestaltet ist, um:
eine Änderung in wenigstens einem elektrischen Feld oder bei kapazitiver Kopplung, die mit wenigstens einer der Elektroden (310) verbunden ist, zu detektieren; und
die Position des Eingabemechanismus (130, 140) in der Nähe zu der berührungsempfindlichen Anzeigevorrichtung (100) als eine Konsequenz festzulegen, eine Änderung in wenigstens einem elektrischen Feld oder bei kapazitiver Kopplung, die mit wenigstens einer der Elektroden (310) verbunden ist, detektiert zu haben, wobei ein oder mehrere Bildpunkte der Lumineszenzschicht (120) so erkannt werden, dass sie durch den Eingabemechanismus (130, 140) überdeckt sind, basierend auf der detektierten Änderung in wenigstens einem elektrischen Feld oder bei kapazitiver Kopplung, die mit wenigstens einer Elektrode (310) verbunden ist, und
wobei das eine oder mehrere Verarbeitungselemente (145) des Weiteren gestaltet sind, um:
die Treiberschaltung zu steuern, um zu bewirken, dass wenigstens einige der dem einen oder mehreren Bildpunkten der Lumineszenzschicht (120) entsprechende Lumineszenzelemente, die dazu bestimmt sind, durch den Eingabemechanismus (130, 140) überdeckt zu werden, erhöhte Lichtmengen aussenden; und
Licht zu detektieren, das von dem Eingabemechanismus (130, 140) reflektiert wird, indem Licht unter Verwendung von Lichtdetektoren detektiert wird, die wenigstens einigen der Bildpunkte der Lumineszenzschicht (120) entsprechen, die durch den Eingabemechanismus (130, 140) überdeckt werden.

2. Vorrichtung nach Anspruch 1, wobei die Lumineszenzschicht (120) in eine Vielzahl von Bildpunkten unterteilt ist, jeder Bildpunkt wenigstens ein Lumineszenzelement enthält, wobei wenigstens einige der Bildpunkte zumindest ein Lichterfassungselement einschließen, oder wobei jeder der Bildpunkte in der Lumineszenzschicht (120) wenigstens einer der Elektroden in der kapazitiven, berührungsempfindlichen Schicht (110) entspricht.

3. Vorrichtung nach Anspruch 1, wobei die kapazitive, berührungsempfindliche Schicht (110) eine gemeinsame Elektrode enthält, die im Abstand von jeder der einen oder mehreren Elektroden angeordnet ist, wobei das eine oder mehrere, zum Festlegen der Position des Eingabemechanismus in der Nähe zur berührungsempfindlichen Anzeigevorrichtung (100) gestaltete, elektronische Verarbeitungselemente ein elektronisches Verarbeitungselement einschließen, das gestaltet ist, um relative Änderungen im Unterschied eines Spannungspotentials zwischen wenigstens einer der Elektroden und der gemeinsamen Elektrode bei Betrieb der Vorrichtung zu detektieren, wobei das eine oder mehrere, zum Festlegen der Position des Eingabemechanismus (130, 140) in der Nähe zur berührungslosen Anzeigevorrichtung (100) gestaltete, elektronische Verarbeitungselemente (145) ein elektronisches Verarbeitungselement einschließen, das gestaltet ist, um die Position des Eingabemechanismus in der Nähe zur berührungsempfindlichen Anzeigevorrichtung (100) als eine Konsequenz festzulegen, eine relative Änderung beim Unterschied eines Spannungspotentials zwischen der wenigstens einen Elektrode und der gemeinsamen Elektrode bei Betrieb der Vorrichtung detektiert zu haben,

4. Vorrichtung nach Anspruch 1, wobei das zum Festlegen der Position des Eingabemechanismus (130, 140) in der Nähe zu der berührungsempfindlichen Anzeigevorrichtung (100) gestaltete, eine oder mehrere elektronische Verarbeitungselemente (145) ein elektronisches Verarbeitungselement einschließen, das gestaltet ist, um: relative Änderungen bei Größen von Umgebungslicht, das auf ein oder mehrere der Lichterfassungselemente einfällt, auf der Basis eines von einem oder mehreren Lichterfassungselementen empfangenen Ausgangs zu detektieren; und die Position des Eingabemechanismus (130, 140) in der Nähe zu der berührungsempfindlichen Anzeigevorrichtung als eine Konsequenz festzulegen, eine relative Änderung bei einer Größe von Umgebungslicht, das auf ein oder mehrere der Lichterfassungselemente einfällt, detektiert zu haben.

5. Vorrichtung nach Anspruch 4, wobei das zum Festlegen der Position des Eingabemechanismus (130, 140) in der Nähe zu der berührungsempfindlichen Anzeigevorrichtung (100) gestaltete, eine oder mehrere elektronische Verarbeitungselemente ein elektronisches Verarbeitungselement einschließen, das gestaltet ist, um: relative Änderungen bei Größen von Umgebungslicht, das auf spezielle Lichterfassungselemente einfällt, auf der Basis eines von den speziellen Lichterfassungselementen empfangenen Ausgangs zu detektieren; und eine Form einer Oberfläche des Eingabemechanismus (130, 140) in der Nähe zur berührungsempfindlichen Anzeigevorrichtung (100) basierend auf den speziellen Lichterfassungselementen, für die relative Änderungen bei Größen von einfallendem Umgebungslicht detektiert wurden, festzulegen.

6. Vorrichtung nach Anspruch 1, wobei das eine oder mehrere Verarbeitungselemente (145) gestaltet sind, um eine räumliche Verteilung der Intensität reflektierten Lichts, das den Bildpunkten der Lumineszenzschicht (120) entspricht, die durch den Eingabemechanismus (130, 140) überdeckt werden, zu messen, wobei das eine oder mehrere Verarbeitungselemente (145) gestaltet sind, um eine räumliche Verteilung von Höchstwerten reflektierten Lichts aus der Verteilung der Intensität reflektierten Lichts festzulegen, und wobei das eine oder mehrere Verarbeitungselemente (145) gestaltet sind, um den Eingabemechanismus (130, 140) basierend auf der räumlichen Verteilung der Höchstwerte reflektierten Lichts zu erkennen.

7. Vorrichtung nach Anspruch 1, wobei das eine oder mehrere Verarbeitungselemente gestaltet sind, um mehrfache Messungen der Lichtintensität bei einer ersten Messfrequenz f₁ vorzunehmen, indem Lichtdetektoren verwendet werden, die wenigstens einigen der Bildpunkte der Lumineszenzschicht (120) entsprechen, die durch den Eingabemechanismus (130, 140) überdeckt werden, und wobei das eine oder mehrere Verarbeitungselemente gestaltet sind, um mehrfache Messungen der Lichtintensität bei einer zweiten Messfrequenz f₂ kleiner als f₁ vorzunehmen, indem Lichtdetektoren verwendet werden, die Bildpunkten entsprechen, die nicht durch den Eingabemechanismus (130, 140) überdeckt werden.

8. Vorrichtung nach Anspruch 6, wobei das eine oder mehrere Verarbeitungselemente (145) gestaltet sind, um die Position des Eingabemechanismus (130, 140) relativ zu der Lumineszenzschicht basierend auf den Höchstwerten reflektierten Lichts festzulegen.

9. Vorrichtung nach Anspruch 6, wobei das eine oder mehrere Verarbeitungselemente (145) gestaltet sind, um eine Ausrichtung des Eingabemechanismus (130, 140) relativ zu der Lumineszenzschicht basierend auf den Höchstwerten reflektierten Lichts festzulegen.

10. Vorrichtung nach Anspruch 8, wobei das eine oder mehrere Verarbeitungselemente (145) gestaltet sind, um die Position des Eingabemechanismus (130, 140) relativ zu der Lumineszenzschicht wiederholt festzulegen, wenn der Eingabemechanismus (130, 140) quer über eine Oberfläche der kapazitiven, berührungsempfindlichen Schicht verschoben wird.

11. Vorrichtung nach Anspruch 10, wobei das eine oder mehrere Verarbeitungselemente (145) gestaltet sind, um Bildpunkte der Lumineszenzschicht (120) basierend auf den Festlegungen der Position des Eingabemechanismus anzupassen, und wobei Anpassen der Bildpunkte das Anpassen einer Lichtmenge, die durch einem oder mehreren Bildpunkten der Lumineszenzschicht (120) entsprechende Lumineszenzelemente übertragen wird, und/oder das Anpassen einer Lichtmenge, die durch einem oder mehreren Bildpunkten der Lumineszenzschicht (120) entsprechende Lumineszenzelemente erzeugt wird, umfasst.

12. Verfahren zur Bedienung einer berührungsempfindlichen Anzeigevorrichtung (100), die eine kapazitive, berührungsempfindliche Schicht (110) mit einer oder mehreren Elektroden (310), eine Lumineszenzschicht (120) mit Lumineszenzelementen (122) und ein oder mehrere Lichterfassungselemente (124) aufweist, wobei das Verfahren umfasst:
Überwachen eines oder mehrerer elektrischer Felder oder einer kapazitiven Kopplung, die mit einer oder mehreren der Elektroden (310) der kapazitiven, berührungsempfindlichen Schicht (110) verbunden ist;
basierend auf dem Überwachen des einen oder mehrerer elektrischer Felder oder der kapazitiven Kopplung, die mit einer oder mehreren der Elektroden (310) der kapazitiven, berührungsempfindlichen Schicht (110) verbunden ist, das Erkennen wenigstens einer Änderung an zumindest einem elektrischen Feld oder einer kapazitiven Kopplung, die mit wenigstens einer der einen oder mehreren Elektroden (310) der kapazitiven, berührungsempfindlichen Schicht (110) verbunden ist;
als eine Konsequenz, wenigstens eine Änderung an zumindest einem elektrischen Feld oder einer kapazitiven Kopplung, die mit wenigstens einer der einen oder mehreren Elektroden (310) der kapazitiven, berührungsempfindlichen Schicht (110) verbunden ist, erkannt zu haben, das Festlegen einer Position eines Eingabemechanismus (130, 140) relativ zu der Lumineszenzschicht (120) basierend auf der einen oder mehreren Elektroden (310) der kapazitiven, berührungsempfindlichen Schicht (110), für welche die Änderung an dem elektrischen Feld oder der kapazitiven Kopplung, die mit der einen oder mehreren Elektroden (310) verbunden ist, erkannt wurde;
Erhöhen einer Intensität von Licht, das ausgesendet wird durch ein oder mehrere der Lumineszenzelemente (122) der Lumineszenzschicht (120), die in Positionen innerhalb der Lumineszenzschicht (120) angeordnet sind, die der festgelegten Position des Eingabemechanismus (130, 140) relativ zu der Lumineszenzschicht (120) entsprechen;
Empfangen, von einem oder mehreren der Lichterfassungselemente (124), von einen Eingang übertragenden Informationen über das Licht, das auf das eine oder mehrere Lichterfassungselemente (124) einfällt; und
Überwachen von Licht, das von dem Eingabemechanismus (130, 140) reflektiert wird, basierend auf dem empfangenen Eingang von dem einen oder mehreren Lichterfassungselementen (124).

13. Verfahren nach Anspruch 12, wobei Erhöhen einer Intensität von Licht, das durch ein oder mehrere der Lumineszenzelemente ausgesendet wird, das Erkennen von Regionen der Lumineszenzschicht (120), die durch den Eingabemechanismus (130, 140) überdeckt werden, und Erhöhen der Intensität von Licht umfasst, das von Lumineszenzelementen ausgesendet wird, die den überdeckten Regionen entsprechen.

14. Verfahren nach Anspruch 12, des Weiteren umfassend das Erkennen des Eingabemechanismus (130, 140) basierend auf dem Licht, das von dem Eingabemechanismus (130, 140) reflektiert wird, wobei Erkennen des Eingabemechanismus (130, 140) das Festlegen einer räumlichen Verteilung der Intensität reflektierten Lichts von dem Eingabemechanismus, das Festlegen der Positionen von Höchstwerten in der räumlichen Verteilung der Intensität reflektierten Lichts und das Erkennen des Eingabemechanismus (130, 140) basierend auf den Höchstwertpositionen umfasst, und wobei Erkennen des Eingabemechanismus (130, 140) das Festlegen von Formen eines oder mehrerer Höchstwerte in der räumlichen Verteilung der Intensität reflektierten Lichts und das Erkennen des Eingabemechanismus (130, 140) auf der Basis der Höchstwertformen umfasst.

## Revendications

1. Un dispositif d'affichage tactile (100), comprenant :
une couche émettrice de lumière (120) comportant des éléments émetteurs de lumière (122) configurés pour créer une image d'affichage en sortie et des éléments détecteurs de lumière (124), où la couche émettrice de lumière est divisée en multiples pixels, chaque pixel comportant au moins un des éléments émetteurs de lumière ;
une couche tactile capacitive (110) comportant une ou plusieurs électrodes (310) ;
des circuits de pilotage des éléments émetteurs de lumière (122) pour créer une image d'affichage en sortie ; et
un ou plusieurs éléments de traitement électronique (145) configurés pour :
identifier le signal de sortie reçu d'un ou plusieurs des éléments détecteurs de lumière (124) ;
identifier le signal de sortie reçu d'au moins une des électrodes (310) ; et d'après au moins un des signaux de sortie identifiés, reconnaître une position d'un mécanisme de saisie (130, 140) à proximité du dispositif d'affichage tactile (100),
où les un ou plusieurs éléments de traitement électronique (145) configurés pour reconnaître la position du mécanisme de saisie (130, 140) à proximité du dispositif d'affichage tactile (100) comportent un élément de traitement électronique configuré pour :
détecter une variation dans au moins un champ électrique ou un couplage capacitif associé à au moins une des électrodes (310) ; et
reconnaître la position du mécanisme de saisie (130, 140) à proximité du dispositif d'affichage tactile (100) en conséquence de la détection d'une variation d'au moins un champ électrique ou un couplage capacitif associé à au moins une des électrodes (310), où un ou plusieurs pixels de la couche émettrice de lumière (120) sont identifiés comme recouverts par le mécanisme de saisie (130, 140) d'après la variation détectée dans au moins un champ électrique ou un couplage capacitif associé à au moins une électrode (310), et
où les un ou plusieurs éléments de traitement (145) sont de plus configurés pour :
commander le circuit de pilotage pour faire émettre une quantité de lumière supplémentaire par au moins certains des éléments émetteurs de lumière correspondant aux un ou plusieurs pixels de la couche émettrice de lumière (120) reconnus comme recouverts par le mécanisme de saisie (130, 140) ; et
détecter la lumière reflétée par le mécanisme de saisie (130, 140) à l'aide de détecteurs de lumière correspondant à au moins certains des pixels de la couche émettrice de lumière (120) recouverts par le mécanisme de saisie (130, 140).

2. Le dispositif de la revendication 1 où la couche émettrice de lumière (120) est divisée en multiples pixels, chaque pixel comportant au moins un élément émetteur de lumière, où au moins certains des pixels comportent au moins un élément détecteur de lumière, ou où chacun des pixels de la couche émettrice de lumière (120) correspond à au moins une des électrodes dans la couche tactile capacitive (110).

3. Le dispositif de la revendication 1, où la couche tactile capacitive (110) comporte une électrode commune à distance de chacune des une ou plusieurs électrodes, où les un ou plusieurs éléments de traitement électronique configurés pour reconnaître la position du mécanisme de saisie à proximité du dispositif d'affichage tactile (100) comportent un élément de traitement électronique configuré pour détecter des variations relatives de la différence de potentiel électrique entre au moins une des électrodes et l'électrode commune pendant l'utilisation de l'appareil, où les un ou plusieurs éléments de traitement électronique (145) configurés pour reconnaître la position du mécanisme de saisie (130, 140) à proximité du dispositif d'affichage tactile (100) comportent un élément de traitement électronique configuré pour reconnaître la position du mécanisme de saisie à proximité du dispositif d'affichage tactile (100) conséquence de la détection d'une variation relative de la différence de potentiel électrique entre la au moins une électrode et l'électrode commune pendant l'utilisation du dispositif.

4. Le dispositif de la revendication 1, où les un ou plusieurs éléments de traitement électronique (145) configurés pour reconnaître la position du mécanisme de saisie (130, 140) à proximité du dispositif d'affichage tactile (100) comportent un élément de traitement électronique configuré pour : détecter les variations relatives de la quantité de lumière ambiante incidente sur un ou plusieurs des éléments détecteurs de lumière d'après le signal de sortie reçu depuis un ou plusieurs éléments détecteurs de lumière ; et reconnaître la position du mécanisme de saisie (130, 140) à proximité du dispositif d'affichage tactile conséquence de la détection d'une variation relative de la quantité de lumière ambiante incidente sur un ou plusieurs des éléments détecteurs de lumière.

5. Le dispositif de la revendication 4, où les un ou plusieurs éléments de traitement électronique configurés pour reconnaître la position du mécanisme de saisie (130, 140) à proximité du dispositif d'affichage tactile (100) comportent un élément de traitement électronique configuré pour : détecter les variations relatives de la quantité de lumière ambiante incidente sur certains éléments détecteurs de lumière d'après le signal de sortie reçu de ces certains éléments détecteurs de lumière ; et reconnaître une forme de la surface du mécanisme de saisie (130, 140) à proximité du dispositif d'affichage tactile (100) d'après des éléments détecteurs de lumière spécifiques sur lesquels ont été détectées des variations relatives des quantités de lumière ambiante incidente.

6. Le dispositif de la revendication 1, où les un ou plusieurs éléments de traitement (145) sont configurés pour mesurer une distribution spatiale de l'intensité de lumière réfléchie correspondant aux pixels de la couche émettrice de lumière (120) recouverts par le mécanisme de saisie (130, 140), où les un ou plusieurs éléments de traitement (145) sont configurés pour reconnaître une distribution spatiale des pics de lumière réfléchie à partir de la distribution de l'intensité de lumière réfléchie, et où les un ou plusieurs éléments de traitement (145) sont configurés pour identifier le mécanisme de saisie (130, 140) d'après la distribution spatiale des pics de lumière réfléchie.

7. Le dispositif de la revendication 1, où les un ou plusieurs éléments de traitement sont configurés pour prendre des mesures multiples d'intensité de lumière à une première fréquence de mesure f₁ à l'aide de détecteurs de lumière correspondant à au moins certains des pixels de la couche émettrice de lumière (120) recouverts par le mécanisme de saisie (130, 140), et où les un ou plusieurs éléments de traitement sont configurés pour prendre de multiples mesures d'intensité de lumière à une deuxième fréquence de mesure f₂ inférieure à f₁ à l'aide des détecteurs de lumière correspondant aux pixels qui ne sont pas recouverts par le mécanisme de saisie (130, 140).

8. Le dispositif de la revendication 6, où les un ou plusieurs éléments de traitement (145) sont configurés pour reconnaître la position du mécanisme de saisie (130, 140) par rapport à la couche émettrice de lumière d'après les pics de lumière réfléchie.

9. Le dispositif de la revendication 6, où les un ou plusieurs éléments de traitement (145) sont configurés pour reconnaître une orientation du mécanisme de saisie (130, 140) par rapport à la couche émettrice de lumière d'après les pics de lumière réfléchie.

10. Le dispositif de la revendication 8, où les un ou plusieurs éléments de traitement (145) sont configurés pour reconnaître de façon répétée la position du mécanisme de saisie (130, 140) par rapport à la couche émettrice de lumière lors d'un déplacement en translation du mécanisme de saisie (130, 140) par rapport à une surface de la couche tactile capacitive.

11. Le dispositif de la revendication 10, où les un ou plusieurs éléments de traitement (145) sont configurés pour régler les pixels de la couche émettrice de lumière (120) d'après les reconnaissances de la position du mécanisme de saisie et où le réglage de ces pixels inclut au moins un réglage d'une quantité de lumière transmise par les éléments émetteurs de lumière, correspondant à un ou plusieurs pixels de la couche émettrice de lumière (120), et réglage d'une quantité de lumière générée par des éléments émetteurs de lumière correspondant à un ou plusieurs pixels de la couche émettrice de lumière (120).

12. Une méthode d'utilisation d'un dispositif d'affichage tactile (100) comprenant une couche tactile capacitive (110) comportant une ou plusieurs électrodes (310), une couche émettrice de lumière (120) comportant des éléments émetteurs de lumière (122), et un ou plusieurs éléments détecteurs de lumière (124), la méthode comprenant :
la surveillance d'un ou plusieurs champs électriques ou couplages capacitifs associés à une ou plusieurs des électrodes (310) de la couche tactile capacitive (110) ;
d'après la surveillance des un ou plusieurs champs électriques ou couplages capacitifs associés à une ou plusieurs des électrodes (310) de la couche tactile capacitive (110), identification d'au moins une variation dans au moins un champ électrique ou couplage capacitif associé à au moins une des une ou plusieurs électrodes (310) de la couche tactile capacitive (110) ;
en conséquence de l'identification d'au moins une variation dans au moins un champ électrique ou couplage capacitif associé à au moins une des une ou plusieurs électrodes (310) de la couche tactile capacitive (110), reconnaissance de la position d'un mécanisme de saisie (130, 140) par rapport à la couche émettrice de lumière (120) d'après les une ou plusieurs électrodes (310) de la couche tactile capacitive (110) dont la variation du champ électrique ou du couplage capacitif associé à les une ou plusieurs électrodes (310) a été identifiée ;
augmentation de l'intensité de lumière émise par un ou plusieurs des éléments émetteurs de lumière (122) de la couche émettrice de lumière (120) situés aux positions dans la couche émettrice de lumière (120) correspondant à la position reconnue pour le mécanisme de saisie (130, 140) par rapport à la couche émettrice de lumière (120) ;
réception de la part d'un ou plusieurs des éléments détecteurs de lumière (124), d'un signal d'entrée transportant des informations sur la lumière incidente sur les un ou plusieurs éléments détecteurs de lumière (124) ; et
suivi de la lumière réfléchie par le mécanisme de saisie (130, 140) d'après le signal d'entrée reçu de la part des un ou plusieurs éléments détecteurs de lumière (124).

13. La méthode de la revendication 12, où l'augmentation de l'intensité de lumière émise par un ou plusieurs des éléments émetteurs de lumière comporte l'identification des régions de la couche émettrice de lumière (120) recouvertes par le mécanisme de saisie (130, 140), et l'augmentation de l'intensité de la lumière émise par les éléments émetteurs de lumière correspondant aux régions recouvertes.

14. La méthode de la revendication 12, comportant de plus l'identification du mécanisme de saisie (130, 140) d'après la lumière réfléchie par le mécanisme de saisie (130, 140), où l'identification du mécanisme de saisie (130, 140) comporte la reconnaissance d'une distribution spatiale de l'intensité de lumière réfléchie par le mécanisme de saisie, la reconnaissance des positions des pics dans la distribution spatiale d'intensité de lumière réfléchie et l'identification du mécanisme de saisie (130, 140) d'après les positions des pics et où l'identification du mécanisme de saisie (130, 140) inclut la reconnaissance des formes d'un ou plusieurs pics dans la distribution spatiale de l'intensité de lumière réfléchie et l'identification du mécanisme de saisie (130,140) d'après les formes des pics.
